# EUROPÄISCHE PATENTSCHRIFT

(11) **EP 3 814 970 B1**
(45) Veröffentlichungstag und Bekanntmachung des Hinweises auf die Patenterteilung: **03.05.2023**
(21) Anmeldenummer: 19734348.6
(22) Anmeldetag: 25.06.2019
(51) Int. Cl.: G06F 21/64, H04L 9/32, H04L 9/00, H04L 9/40

(54) **MANIPULATIONSSICHERES AUSSTELLEN UND SPEICHERN VON ELEKTRONISCHEN URKUNDEN**
TAMPER-PROOF ISSUING AND STORING OF ELECTRONIC CERTIFICATES
ÉMISSION ET MISE EN MÉMOIRE INVIOLABLES DE CERTIFICATS ÉLECTRONIQUES

(30) Priorität: 26.06.2018 DE 102018115350
(43) Veröffentlichungstag der Anmeldung: 05.05.2021
(73) Patentinhaber: Bundesdruckerei GmbH, 10969 Berlin (DE)
(72) Erfinder: RÜCKRIEMEN, Jörg, 10999 Berlin (DE)
(74) Vertreter: Richardt Patentanwälte PartG mbB
(86) Internationale Anmeldenummer: PCT/EP2019/066852
(87) Internationale Veröffentlichungsnummer: WO 2020/002341

(56) Entgegenhaltungen:
- EP-A1- 3 318 999
- DE-B3-102017 204 536

## Beschreibung

Die Erfindung betrifft ein Verfahren zum manipulationssicheren Ausstellen und Speichern einer Mehrzahl von elektronischen Urkunden unter Verwendung einer Blockchain, sowie einen Blockchain-Server und ein Blockchain-Netzwerk zum Ausführen des Verfahrens.

Urkunden dienen dazu, als schriftlich niedergelegte und häufig beglaubigte Erklärungen einen bestimmten Sachverhalt zu fixieren. Insbesondere öffentliche Urkunden werden von einer öffentlichen Behörde innerhalb der Grenzen ihrer Amtsbefugnisse oder von einer mit öffentlichem Glauben versehenen Person innerhalb eines ihr zugewiesenen Geschäftskreises in einer vorgeschriebenen Form ausgestellt. Dabei trägt eine öffentliche Urkunde den Beweis ihrer Echtheit in sich. Mit anderen Worten beweist eine öffentliche Urkunde die Richtigkeit der Beurkundung, wobei ihre formelle Beweiskraft umfasst, dass die in Form der Urkunde manifestierte Erklärung nach Zeit, Ort und Inhalt wie beurkundet abgegeben wurde.

Einen solchen Beweis ihrer Echtheit in einer konkreten Urkunde tatsächlich zuverlässig zu implementieren, kann sich in der Praxis als schwierig erweisen. So erschöpft sich der Echtheitsbeweis bei Urkunden, wie beispielsweise Geburtsurkunden, im Allgemeinen in einem Siegel der ausstellenden Behörde, z.B. des ausstellenden Standesamtes, einer Unterschrift des beurkundenden Beamten, z.B. des beurkundenden Standesbeamten, einer Namensangabe des beurkundenden Beamten, z.B. des beurkundenden Standesbeamten, sowie Angaben zu Ort und Datum der Ausstellung. Diese Sicherheitsmerkmale lassen sich jedoch einfach nachahmen und/oder sind in der Praxis nur schwer zu überprüfen. Nichtsdestotrotz stellen Urkunden, wie beispielsweise die Geburtsurkunde, die Grundlage für die Identität einer Person dar. Mit anderen Worten werden auf dieser Grundlage weitere Ausweisdokumente ausgestellt. Ferner sind Geburtsurkunden im Zuge verschiedenen öffentlichen und privaten Bewerbungen und Anmeldungen als Identitätsnachweis vorzulegen.

Die DE 10 2017 204 536 B3 beschreibt ein Verfahren zum Ausstellen eines virtuellen Dokuments mittels eines ersten Computersystems eines Ausstellers. Das Verfahren umfasst ein Erstellen des virtuellen Dokuments, ein Berechnen eines Hashwerts des virtuellen Dokuments, ein Senden einer signierten Eintragungsanfrage mit dem Hashwert an einen Blockchain-Server, ein Empfangen der signierten Eintragungsanfrage durch den Blockchain-Server, ein Ausführen von Programminstruktionen eines durch die signierte Eintragungsanfrage identifizierten Programmmoduls durch den Blockchain-Server, wobei das Ausführen der Programminstruktionen ein Prüfen der Signatur der Eintragungsanfrage unter Verwendung eines in der Blockchain registrierten öffentlichen kryptographischen Schlüssels des Ausstellers umfasst, und, im Falle einer gültigen Signatur, zum Ausstellen des virtuellen Dokuments ein Erzeugen eines zusätzlichen Blocks der Blockchain, wobei der erzeugte Block einen dem Programmmodul zugeordneten Eintrag mit dem ersten Hashwert umfasst.

Der Erfindung liegt daher die Aufgabe zugrunde, ein effizientes und sicheres Verfahren zum manipulationssicheren Ausstellen und Speichern von elektronischen Urkunden zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein computerimplementiertes Verfahren zum manipulationssicheren Ausstellen und Speichern einer Mehrzahl von elektronischen Urkunden unter Verwendung einer Blockchain.

Die elektronischen Urkunden entsprechen jeweils einer Spezifikation einer vorgegebenen Mehrzahl von Spezifikationen, wobei die Spezifikationen der Mehrzahl von Spezifikationen unterschiedlichen hoheitlichen Institutionen einer Mehrzahl von hoheitlichen Institutionen zugeordnet sind. Die Blockchain umfasst eine Mehrzahl von Programmmodulen, wobei die Programmmodule jeweils einer der Spezifikationen zugeordnet sind. Die Blockchain wird von einem Blockchain-Netzwerk bereitgestellt, welches eine Mehrzahl von Blockchain-Servern umfasst. Die Blockchain-Server sind jeweils dazu konfiguriert, zusätzliche Blöcke für die Blockchain zu erstellen und in die Blockchain einzutragen, wobei die Blockchain-Server unterschiedlichen hoheitlichen Institutionen zugeordnet sind.

Das Verfahren umfasst:
- Empfangen eines ersten Datensatzes zum Eintragen in die Blockchain durch einen ersten Blockchain-Server des Blockchain-Netzwerks, wobei der erste Datensatz Daten einer auszustellenden ersten elektronischen Urkunde entsprechend einer ersten Spezifikation einer ersten hoheitlichen Institution umfasst, wobei der erste Blockchain-Server der ersten hoheitlichen Institution zugeordnet ist,
- Ausführen erster Programminstruktionen eines ersten Programmmoduls der Mehrzahl von Programmmodulen durch den ersten Blockchain-Server, wobei das erste Programmmodul zum Ausstellen von elektronischen Urkunde entsprechend der ersten Spezifikation konfiguriert ist, wobei das Ausführen der ersten Programminstruktionen ein Prüfen des ersten Datensatzes durch den ersten Blockchain-Server umfasst, ob der erste Datensatz die erste Spezifikation erfüllt, falls der erste Datensatz die erste Spezifikation erfüllt, ein Hinzufügen des ersten Datensatzes zu einem ersten zusätzlichen Block der Blockchain.

Ausführungsformen können den Vorteil haben, dass elektronische Urkunden unterschiedlicher hoheitlicher Institutionen und insbesondere hoheitlicher Institutionen unterschiedlicher Staaten, welche gegebenenfalls unterschiedliche Spezifikationen aufweisen, unter Verwendung der gemeinsamen Blockchain in transparenter und nachvollziehbarer Weise manipulationssicher gespeichert werden können. Die einzelnen elektronischen Urkunden bleiben dabei in der Verfügungsgewalt der ausstellenden hoheitlichen Institutionen, z. B. in nationaler Hoheit, und können zugleich nationale Spezifika aufweisen. Beispielsweise ist für jede dieser nationalen Spezifikationen jeweils ein eigenständiges Programmodul vorgesehen. Mit anderen Worten wird es also jedem teilnehmenden Staat bzw. den hoheitlichen Institutionen des entsprechenden Staats ermöglicht die Verfügungsgewalt bzw. Ownership über die eigenen Datensätze bzw. Urkunden zu behalten. Ferner kann jeder Staat die eigenen hoheitlichen Institutionen, wie etwa Ämter, autorisieren auf die eigenen Datensätze bzw. Urkunden zuzugreifen und/oder diese zu verändern. Dabei sind die Autorisierungen, beispielsweise durch Eintragen bzw. Registrieren in der Blockchain, sowie die von den autorisierten Institutionen vorgenommenen Aktionen nachverfolgbar. Zudem kann jeder Staat eigene nationale nationalen Spezifikationen in eigene Programmodule bzw. Smart Contracts einbringen. Ferner kann jeder der Staaten bzw. jede der hoheitlichen Institutionen, welche beispielsweise jeweils einen der Staaten repräsentieren, über zumindest einen der Blockchain-Server verfügen. Nach Ausführungsformen sind die Programmmodule dazu konfiguriert, nur elektronische Urkunden einzutragen, welche von der hoheitlichen Institution, welcher die von dem entsprechenden Programmmodul implementierte Spezifikation zugeordnet ist, oder von einer durch die entsprechende hoheitliche Institution autorisierten Institution stammen. Dies kann beispielsweise durch eine Signaturanforderung als Teil der Spezifikation implementiert werden. Beispielsweise müssen Datensätze, um die entsprechende Spezifikation zu erfüllen, mit einer Signatur versehen sein, deren Authentizität mit einem der entsprechenden hoheitlichen Institution zugeordneten oder einem einer durch die entsprechende hoheitliche Institution autorisierten Institution zugeordneten öffentlichen kryptografischen Schlüssel bestätigt wird. Nach Ausführungsformen haben die Blockchain-Server jeweils nur einen Schreibzugriff auf die Blockchain unter Verwendung des Programmmoduls, welches die dem entsprechenden Blockchain-Server bzw. der hoheitlichen Institution des entsprechenden Blockchain-Servers zugeordnete Spezifikation implementiert. Durch die Signaturanforderung, eigenständigen Programmodule für nationale Spezifikationen und/oder Blockchain-Server in der Verfügung von individuellen Staaten oder hoheitlichen Institutionen individueller Staaten wird es im Falle eines Verbands von Staaten, welche die Blockchain betreiben bzw. Teil des Blockchain-Netzwerks sind, den individuellen Staaten des Verbands ferner ermöglicht die eigenen Datensätze zu behalten, jederzeit aus dem Verband auszusteigen und allein weiterzumachen, d.h. unabhängig von den anderen Staaten eigene Datensätze in die Blockchain einzutragen und zu verwalten. Nach Ausführungsformen sind die Datensätze eines Staats, welcher ausgestiegen ist, nach wie vor Teil der gemeinsamen Blockchain, aber die anderen Staaten haben beispielsweise keinen Lesezugriff mehr auf die entsprechenden Daten-sätze. Beispielsweise werden die Datensätze verschlüsselt. Die zur Entschlüsselung notwendigen kryptographischen Schlüssel, z.B. symmetrische oder asymmetrische Schlüssel, insbesondere private Schlüssel, befinden sich beispielsweise in der Verfügungsgewalt der hoheitlichen Institutionen, welchen die entsprechenden Datensätze zugeordnet sind. Nach Ausführungsformen befinden sich die entsprechenden kryptographischen Schlüssel in der Verfügungsgewalt einer Mehrzahl von hoheitlichen Institutionen desselben Staats. Ein Lesezugriff durch eine Person oder Entität, welche nicht über den zur Entschlüsselung notwendigen kryptographischen Schlüssel verfügt, bedarf daher einer Entschlüsselung durch eine hoheitliche Institution, welche über einen solchen Schlüssel verfügt. Eine Entschlüsselung erfolgt beispielsweise auf Anfrage. Beispielsweise wird eine Signatur der Anfrage geprüft, um zu bestimmen, ob die anfragende Person oder Entität zugriffsberechtigt ist. Durch eine Verweigerung der Entschlüsselung durch die hoheitlichen Institutionen können somit Lesezugriffsrechte effektiv entzogen werden. Nach Ausführungsformen können die zur Entschlüsselung notwendigen kryptographischen Schlüssel zentral gespeichert werden und eine Entschlüsselung erfolgt auf eine erfolgreiche Prüfung der Zugriffsberechtigung einer anfragenden Person oder Entität, etwa anhand einer Signatur der Anfrage, hin. Eine solche Prüfung kann auf Basis einer, beispielsweise von der Blockchain umfassten, Registrierung von Zugriffsrechten, welche revozierbar sind, erfolgen.

Nach Ausführungsformen umfasst der erste Datensatz einen Identifikator eines in der Blockchain eingetragenen Datensatzes, wobei der eingetragene Datensatz Daten einer ausgestellten elektronischen Urkunde entsprechend der ersten Spezifikation der ersten hoheitlichen Institution oder einer weiteren Spezifikation einer weiteren hoheitlichen Institution umfasst. Ausführungsformen können den Vorteil haben, dass Links auf andere Urkunden bzw. Datensätze in Form von Identifikatoren der entsprechenden Urkunden bzw. Datensätze implementiert werden können. Beispielsweise legt die erste Spezifikation fest, welche Art von Identifikator der erste Datensatz umfassen darf, z.B. welche Spezifikationen der Datensatz erfüllen muss, auf welche der Identifikator verweist bzw. welchen der Identifikator identifiziert. Bei dem Identifikator des eingetragenen Datensatzes kann es sich um einen Identifikator des individuellen Datensatzes und/oder um einen Identifikator der ausgestellten elektronischen Urkunde handeln, auf den bzw. die mittels des Identifikators verlinkt wird.

Nach Ausführungsformen ist auf jedem der Blockchain-Server jeweils eine vollständige Kopie der Blockchain gespeichert. Mithin hat beispielsweise jeder Blockchain-Server einen Lesezugriff auf sämtliche Einträge der Blockchain. Beispielsweise sind die Datensätze verschlüsselt und für einen Lesezugriff ist eine Entschlüsselung des entsprechenden Datensatzes notwendig. In diesem Fall haben die Blockchain-Server jeweils nur einen Lesezugriff auf solche Einträge der Blockchain, für die sie auch ein Zugriffrecht auf den zur Entschlüsselung jeweils notwendigen kryptographischen Schlüssel besitzen. Nach Ausführungsformen bildet das Blockchain-Netzwerk ein Peer-to-Peer-Netzwerk. Somit können Urkunden unterschiedlicher hoheitlicher Institutionen, insbesondere unterschiedlicher Staaten, in effizienter Weise eingesehen werden. Beispielsweise ermöglichen es Ausführungsformen, ein dezentrales multinationales, z. B. europäisches, Geburtsurkundenregister auf Basis vordefinierter Programmmodule, sog. Smart Contracts, einzurichten. Ausführungsformen können den Vorteil, dass sich auch elektronische Urkunden anderer hoheitlicher Institution der Mehrzahl von hoheitlichen Institutionen unter Verwendung der Blockchain effektiv und effizient auf ihre Gültigkeit hin prüfen lassen.

Zusätzlich können die Urkunden, z. B. Geburtsurkunden, mit identischem Inhalt und/oder auf diesen Urkunden basierende Dokumente in körperlicher Form, z. B. auf Papier oder Kunststoff, ausgestellt werden. Diese körperlichen Urkunden und Dokumente können mit einem maschinenlesbaren Code versehen werden, z. B. einem mit optoelektronischen Erfassungsmitteln auslesbarer Code, wie etwa einem QR-Code, oder einem Code, welcher in einem Speicher, wie etwa einem elektronischen Speicher, bereitgestellt wird und unter Verwendung einer Funkverbindung auslesbar ist. Beispielsweise wird der maschinenlesbare Code unter Verwendung eines RFID-Tags bereitgestellt. Der maschinenlesbare Code kann einen Identifikator der entsprechenden manipulationssicher in der Blockchain gespeicherten Urkunde bereitstellen. Unter Verwendung des entsprechenden Identifikators können die der entsprechenden Urkunde zugeordneten Einträge in der Blockchain identifiziert und ausgelesen werden. Hierbei kann es sich beispielsweise sowohl um Einträge handeln, welche Teil der elektronischen Urkunde sind, als auch Einträge, welche auf der Urkunde basieren, etwa Verweise auf Dokumente, welche basierend auf der Urkunde ausgestellt wurden. Somit kann anhand der elektronischen Blockchain die Echtheit einer körperlichen Urkunde nachgewiesen werden, indem der Inhalt der entsprechenden körperlichen Urkunde auf Übereinstimmung mit einer in der Blockchain manipulationssicher hinterlegten elektronischen Urkunde geprüft wird. Liegt eine Übereinstimmung vor, so ist die Echtheit der vorgelegten körperlichen Urkunde nachgewiesen. Im Falle einer Prüfung eines vorgelegten Dokuments, welches auf der in der Blockchain eingetragenen Urkunde basiert, kann neben einem zumindest teilweisen inhaltlichen Abgleich zusätzlich geprüft werden, ob ein Ausstellungvermerk für das vorliegende Dokument auf Basis der elektronischen Urkunde in der Blockchain eingetragen ist. Ein entsprechender inhaltlicher Abgleich kann beispielsweise vollautomatisch durch Einscannen des auf der körperlichen Urkunde oder dem körperlichen Dokument aufgebrachten, z. B. aufgedruckten, Inhalts erfolgen. Nach Ausführungsformen kann auch ein Speichermedium der körperlichen Urkunde oder des körperlichen Dokuments mit einer Kopie des entsprechenden Inhalts in elektronischer Form mit einem Lesegerät vollautomatisch ausgelesen werden. Dies erlaubt eine effiziente und effektive Echtheitsprüfung von Urkunden und Dokumenten. Ebenso kann die Grundlage von körperlichen Dokumenten geprüft werden, welche unter Verwendung von Daten erstellt wurden, welche durch die elektronische Urkunde beurkundet werden. Beispielsweise kann ein ID-Dokument, wie etwa ein Personalausweis oder Reisepass, ein Zeugnis, wie etwa ein Hochschulzeugnis, oder ein Zulassungsdokument, wie etwa eine Approbation, ein Meisterbrief oder ein Führerschein, Angaben zu Geburtsname, Geburtsort und/oder Geburtsdatum umfassen. Diese Angaben werden durch eine Geburtsurkunde beurkundet, welche beispielsweise als elektronischen Dokument in der Blockchain manipulationssicher gespeichert sein kann. Durch einen Abgleich der entsprechenden Angaben mit den von der elektronischen Urkunde bereitgestellten Daten, kann die Korrektheit dieser grundlegenden Angaben eines entsprechenden Dokuments geprüft werden.

Die Spezifikation, welche ein Datensatz zum Eintragen in die Blockchain erfüllen muss, kann beispielsweise neben kryptografischen Bedingungen, wie etwa eine Signatur, auch inhaltliche Bedingungen, wie ein Vorhandensein von vordefinierten Angaben umfassen.

Unter einer "elektronischen Urkunde" wird hier ein Datenkonstrukt zur elektronischen Datenverarbeitung verstanden, welches Nutzdaten sowie eine Bescheinigung der Richtigkeit dieser Nutzdaten umfasst. Insbesondere kann die Gültigkeit einer elektronischen Urkunde unabhängig von einem Vorhandensein eines der Urkunde zugeordneten Urkundenkörpers sein. Mit anderen Worten kann eine elektronische Urkunde aus ein oder mehreren Einträgen in ein oder mehreren Blöcken der Blockchain bestehen, unabhängig vom Speichermedium der Blockchain. Unter einer körperlichen Urkunde wird hier eine Urkunde verstanden, welche nur in Kombination mit ihrem Dokumentenkörper, beispielsweise aus Papier und/oder Kunststoff, Gültigkeit besitz.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Bei einer Blockchain werden die Einträge bzw. Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme beispielsweise in einem Header des Blocks vermerkt. Das Verketten der Blöcke kann dann unter Verwendung dieser Root-Hashwerte überprüft werden. Jeder Block der Blockchain enthält in seinem Header beispielsweise den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Transaktionen praktisch ausgeschlossen ist, da hierfür die Hashwerte aller nachfolgenden Blöcke in kurzer Zeit ebenfalls neu berechnet werden müssten.

Der erste Block in der Blockchain ist vorgegeben und wird Genesisblock genannt. Nach Ausführungsformen sind die öffentlichen kryptografischen Schlüssel eines oder mehrerer Provider, welche zum Erstellen von Programmodulen berechtigt sind, in dem Genesisblock gespeichert. Der Genesisblock ist aufgrund der zuvor beschriebenen Kettenstruktur, derjenige Block, dessen Einträge das höchste Maß an Sicherheit aufweisen, da zu seiner Änderung die gesamte Blockchain durch eine neue Blockchain ersetzt werden müsste. Mithin kann der Eintrag des öffentlichen kryptografischen Schlüssels in den Genesisblock einen Vertrauensanker mit einem ausreichenden Maß an Sicherheit darstellen, sodass beispielsweise keine zusätzliche PKI-Prüfung notwendig ist, um der Authentizität des öffentlichen kryptografischen Schlüssels zu vertrauen.

Vielmehr kann die Blockchain ausgehend von öffentlichen Schlüsseln, welche beispielsweise als Teil der Programmodule und/oder als Teil eines Genesisblocks in die Blockchain eingetragen werden als Root-Keys oder Wurzelschlüssel für ein oder mehrere PKIs dienen, welche durch die Blockchain implementiert werden. So können beispielsweise weitere öffentliche Schlüssel in die Blockchain eingetragen werden, wenn die zugrundeliegenden Eintragungs- bzw. Registrierungsanfragen mit einer Signatur versehen sind, deren Gültigkeit sich unter Verwendung eines bereits in der Blockchain gültig eingetragenen öffentlichen Schlüssel bestätigen lässt.

Nach Ausführungsformen kann eine Blockchain durch eine Anpassung der notwendigen Rechenintensität für die Erstellung jeweils zusätzlicher Blöcke die Sicherheit der Blockchain anpassen. Die für die Erstellung zusätzlicher Blöcke notwendige Rechenintensität lässt sich beispielsweise über Anforderungen an den Hashwert des zu erstellenden zusätzlichen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen zusätzlichen Blocks notwendig ist. Der Hashwert eines Blocks lässt sich beispielsweise durch Hinzufügen und Variieren eines Nounce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung zusätzlicher Blöcke aus. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Hashwerte, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. target) ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/ 2²⁵⁶ ≈ 2⁻³². Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchain-Servern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Eine Blockchain kann beispielsweise auch in Form einer privaten, d.h. zugangsbeschränkten, Blockchain implementiert werden, wobei nur eine ausgewählte Gruppe von Teilnehmern eine Berechtigung zum Hinzufügen gültiger Blöcke und/oder zum Lesen von Blöcken besitzt. Eine entsprechende Berechtigung kann beispielsweise mittels einer Signatur unter Verwendung eines privaten kryptografischen Schlüssels nachgewiesen werden. Der private kryptografische Schlüssel kann zu einem asymmetrischen Schlüsselpaar gehören, zu welchem auch ein öffentlicher kryptografischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählten Gruppe ein öffentlicher Schlüssel in der Blockchain hinterlegt sein. Anhand dieser öffentlichen Schlüssel kann geprüft werden, ob Signaturen von Blöcken und damit die entsprechenden Blöcke selbst gültig sind. Mit anderen Worten kann die Blockchain in diesem Fall selbst eine eigenständige PKI bereitstellen.

Ein Konsens über eine Gültigkeit eines zusätzlichen Blocks für die Blockchain bzw. über ein Hinzufügen eines zusätzlichen Blocks zu der Blockchain kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Bei diesen Teilnehmern kann es sich beispielsweise um Blockchain-Server handeln. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Beispielsweise kann es sich bei der Blockchain um eine private oder öffentliche Blockchain handeln. Beispielsweise handelt es sich um eine Bitcoin-, Litecoin- oder Ethereum-Blockchain.

Ein "Programmmodul" bezeichnet hier ein eigenständiges Programm, welches in einer Blockchain gespeichert ist. Das Programmmodul kann dazu konfiguriert sein das Erstellen von dem Programmmodul zugeordneten Einträgen in der Blockchain zu steuern. Das Programmodul kann in einem Block der Blockchain oder über mehrere Blöcke der Blockchain verteilt gespeichert sein. Jeder Urkundenspezifikation ist beispielsweise ein individuelles Programmmodul zugeordnet. Bei einem Programmmodul kann es sich beispielsweise um einen "smart contract" handeln, wie er beispielsweise in der Open Source Ethereum Blockchain implementierbar ist.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Eine solche Bestätigung kann auch über einen Eintrag in der Blockchain erfolgen, in welchem Fall diese Einträge als Zertifikate zu verstehen sind. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein Zertifikat in Assoziation mit einem öffentlichen Schlüssel der Allgemeinheit zur Verfügung gestellt wird, wird es Nutzern asymmetrischer Kryptosysteme ermöglicht den öffentlichen Schlüssel einer Identität, beispielsweise einer Person, einer Organisation, oder einem Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptografisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptografischen Schlüsselpaares verschlüsselter Hashwert. Ein entsprechendes Verschlüsseln eines Hashwerts wird mithin als Signieren des Hashwerts bezeichnet. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit digitaler Dokumente sicherstellen und nachweisen, dass diese von einer bestimmten juristischen Person stammen.

Unter einem "Speicher" werden hier sowohl flüchtige als auch nicht flüchtige Speicher, insbesondere elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Mobilfunknetzwerk" wird hier und im Folgenden ein digitales zellulares Mobilfunknetzwerk verstanden, welches nach einem Mobilfunkstandard wie zum Beispiel GSM, UMTS, LTE, CDMA oder einem anderen Standard aufgebaut sein kann.

Nach Ausführungsformen ist der erste Datensatz signiert. Die Signatur des ersten Datensatzes dient als ein Nachweis einer Berechtigung zum Ausstellen einer elektronischen Urkunde entsprechend der ersten Spezifikation der ersten hoheitlichen Institution und der erste Blockchain-Server prüft als eine Voraussetzung für die Eintragung des ersten Datensatzes in die Blockchain unter Verwendung eines ersten öffentlichen kryptografischen Schlüssels, ob die Signatur des ersten Datensatzes gültig ist.

Ausführungsformen können den Vorteil haben, dass durch eine Überprüfung der Signatur sichergestellt werden kann, dass ein in die Blockchain einzutragender Datensatz von einem dazu berechtigten Ersteller vorgelegt wird und dass der Inhalt des vorgelegten Datensatzes mit dem Inhalt zum Zeitpunkt der Signatur übereinstimmt, d.h. dass der Inhalt des Datensatzes von dem eintragungsberechtigten Ersteller bestätigt wird.

Nach Ausführungsformen umfasst die erste Spezifikation eine gültige Signatur des ersten Datensatzes und das Ausführen der ersten Programminstruktionen umfasst das Prüfen der Signatur des ersten Datensatzes unter Verwendung des ersten öffentlichen kryptografischen Schlüssels.

Ausführungsformen können den Vorteil haben, dass eine Signaturprüfung als Teil der zu erfüllenden Spezifikation durch das Programmmodul, genauer gesagt durch die von dem Programmmodul bereitgestellten Programminstruktionen, vorgegeben und somit im Zuge der Eintragung automatisch implementiert wird.

Nach Ausführungsformen wird der erste öffentliche kryptografische Schlüssel zur Prüfung der Signatur des ersten Datensatzes von der Blockchain zur Verfügung gestellt. Ausführungsformen können den Vorteil haben, dass neben der Blockchain keine weitere umfangreiche PKI notwendig ist, sondern dass die Blockchain vielmehr eine eigene PKI umfasst.

Nach Ausführungsformen wird der erste Datensatz über eine Ende-zu-Ende-verschlüsselte Kommunikationsverbindung empfangen. Ausführungsformen können den Vorteil haben, dass eine sichere Übertragung des Datensatzes von einem als Sender fungierenden Computersystem über ein Netzwerk, ein privates oder öffentliches Netzwerk, an den Blockchain-Server in sicherer Weise erfolgen kann. Bei alternativen Ausführungsformen handelt es sich bei dem Datensatz um einen von dem Blockchain-Server selbst ausgestellten Datensatz.

Eine Urkunde umfasst beispielsweise ein oder mehrere der folgenden Angabe: Einen Namen einer die Urkunde ausstellenden juristischen Person, einen Namen einer beurkundenden natürlichen Person, einen Ort der Ausstellung, ein Datum der Ausstellung, ein Siegel der ausstellenden juristischen Person, z.B. ein elektronisches Siegel, eine Signatur der beurkundenden natürlichen Person, z.B. eine elektronische Signatur, sowie zu beurkundende Angaben, d.h. Daten.

Nach Ausführungsformen handelt es sich bei den elektronischen Urkunden um Geburtsurkunden.

Eine Geburtsurkunde eines Kindes umfasst beispielsweise ein oder mehrere der folgenden Angabe: Einen Namen des ausstellenden Standesamts, eine laufende Nummer des Geburtseintrags, z.B. zusammen mit dem Jahr der Geburt, alle Vornamen des Kindes, einen Geburtsname des Kindes, ein Geschlecht des Kindes, ein Geburtsdatum des Kindes, einen Geburtsort des Kindes, Angaben zu rechtlichen Eltern, z.B. Vornamen und Familiennamen sowie Angaben zu Religion des Kindes und Elternteils, einen Ort des ausstellenden Standesamts, ein Datum der Ausstellung der Geburtsurkunde, ein Siegel des Standesamtes, z.B. ein elektronisches Siegel, d.h. eine elektronische Signatur, deren zugrundeliegendes asymmetrische Schlüsselpaar keiner natürlichen Person sondern einer juristischen Person zugeordnet ist, eine Signatur des beurkundenden Standesbeamten, z.B. eine elektronische Signatur des beurkundenden Standesbeamten, einen Namen des beurkundenden Standesbeamten.

Nach Ausführungsformen umfasst das Verfahren ferner:
- Empfangen eines zweiten Datensatzes zum Eintragen in die Blockchain durch einen zweiten Blockchain-Server des Blockchain-Netzwerks, wobei der zweite Datensatz Daten einer auszustellenden zweiten elektronischen Urkunde entsprechend einer zweiten Spezifikation einer zweiten hoheitlichen Institution umfasst, wobei der zweite Blockchain-Server der zweiten hoheitlichen Institution zugeordnet ist,
- Ausführen zweiter Programminstruktionen eines zweiten Programmmoduls der Mehrzahl von Programmmodulen durch den zweiten Blockchain-Server, wobei das zweite Programmmodul zum Ausstellen von elektronischen Urkunden entsprechend der zweiten Spezifikation konfiguriert ist, wobei das Ausführen der zweiten Programminstruktionen ein Prüfen des zweiten Datensatzes durch den zweiten Blockchain-Server umfasst, ob der zweite Datensatz die zweite Spezifikation erfüllt, falls der zweite Datensatz die zweite Spezifikation erfüllt, ein Hinzufügen des zweiten Datensatzes zu einem zweiten zusätzlichen Block der Blockchain.

Ausführungsformen können den Vorteil haben, dass die einzelnen hoheitlichen Institutionen unabhängig voneinander elektronische Urkunden mit unterschiedlichen Spezifikationen ausstellen und manipulationssicher in der Blockchain speichern können.

Nach Ausführungsformen umfasst das Verfahren ferner:
- Empfangen eines dritten Datensatzes zum Eintragen in die Blockchain durch den ersten Blockchain-Server des Blockchain-Netzwerks, wobei der dritte Datensatz Daten zur Ergänzung des ersten Datensatzes der ausgestellten ersten elektronischen Urkunde und einen Identifikator des ersten Datensatzes umfasst,
- Ausführen der ersten Programminstruktionen durch den ersten Blockchain-Server, wobei das Ausführen der ersten Programminstruktionen ein Prüfen des dritten Datensatzes durch den ersten Blockchain-Server umfasst, ob der dritte Datensatz ein oder mehrere von dem ersten Programmmodul festgelegte erste Voraussetzungen erfüllt, falls der dritte Datensatz die ersten Voraussetzungen erfüllt, ein Hinzufügen des dritten Datensatzes zu einem dritten zusätzlichen Block der Blockchain.

Ausführungsformen können den Vorteil haben, dass sie Ergänzungen der elektronischen Urkunden ermöglichen. Bei entsprechenden Ergänzungen kann es sich entweder um Korrekturen handeln, d.h. Angaben der ursprünglichen elektronischen Urkunde werden durch Angaben ersetzt, welche der Datensatz, d.h. Ergänzungsdatensatz, bereitgestellt, oder um Zusätze, d.h. es werden zusätzliche Angaben ergänzt, welche die ursprüngliche elektronische Urkunde noch nicht umfasst hat. So wird beispielsweise nach deutschem Recht im Fall einer Geburtsurkunde bei einem Kind, welches während einer bestehenden Ehe geboren wird, der Vater, der zum Zeitpunkt der Geburt mit der Mutter des Kindes verheiratet ist, als Vater des Kindes in die Geburtsurkunde eingetragen. Handelt es sich bei dem mit der Mutter verheirateten Mann nicht um den leiblichen Vater, so kann die Angabe zum Vater des Kindes später korrigiert werden, wobei der leibliche Vater als Vater des Kindes eingetragen wird.

Nach Ausführungsformen umfasst der erste Datensatz einen öffentlichen kryptografischen Schlüssel eines asymmetrischen Schlüsselpaars der ersten elektronischen Urkunde. Der dritte Datensatz ist mit einem privaten kryptografischen Schlüssel des asymmetrischen Schlüsselpaars der ersten elektronischen Urkunde signiert. Eine der ersten Voraussetzungen ist eine gültige Signatur des dritten Datensatzes mit dem privaten kryptografischen Schlüssel des asymmetrischen Schlüsselpaars der ersten elektronischen Urkunde und das Ausführen der dritten Programminstruktionen umfasst das Prüfen der Signatur des dritten Datensatzes unter Verwendung des von dem ersten Datensatz bereitgestellten öffentlichen kryptografischen Schlüssel.

Ausführungsformen können den Vorteil haben, dass der elektronischen Urkunde ein asymmetrisches Schlüsselpaar zugeordnet werden kann, welches es dem Besitzer des privaten kryptografischen Schlüssels des entsprechenden asymmetrischen Schlüsselpaars ermöglicht, weitere Daten in die Blockchain einzutragen und somit an die elektronische Urkunde anzuhängen. Beispielsweise kann ein privater Schlüssel des entsprechenden kryptografischen Schlüsselpaars von einer körperlichen Version der elektronischen Urkunde umfasst sein. So kann etwa bei jeder Verwendung der entsprechenden körperlichen Urkunde ein Hinzufügen eines entsprechenden Vermerks in die Blockchain als zusätzlicher Eintrag ermöglicht werden. Durch die Signatur mit dem privaten Schlüssel kann dabei nachgewiesen werden kann, dass die körperliche Version der elektronischen Urkunde tatsächlich vorgelegen hat.

Nach Ausführungsformen umfasst das Verfahren ferner ein Ausstellen einer ersten körperlichen Urkunde, welche inhaltlich mit der ersten elektronischen Urkunde übereinstimmt, unter Verwendung des ersten Datensatz. Die erste körperliche Urkunde umfasst einen maschinenlesbaren Code, wobei der maschinenlesbare Code einen Identifikator des ersten Datensatzes und/oder einen Identifikator des dritten Datensatzes umfasst.

Ausführungsformen können den Vorteil haben, dass die Echtheit einer körperlichen Urkunde durch die Blockchain in effektiver und effizienter Weise mittels eines Abgleichs der von der körperlichen Urkunde bereitgestellten Daten mit den in der Blockchain gespeicherten Daten implementiert werden kann.

Bei dem maschinenlesbaren Code kann es sich beispielsweise um einen ein- oder zweidimensionalen graphischen Code handeln, welcher mittels eines optoelektronischen Lesegeräts lesbar ist. Der Code kann gängige Schrift-, Zahl- und/oder Sonderzeichen umfassen. ferner kann der Code geometrische Formen, wie etwa Striche und Punkte unterschiedlicher Dimensionierung umfassen. Bei dem Code handelt es sich beispielsweise um einen eindimensionalen Strichcode, einen gestapelten eindimensionalen Strichcode, einen Array-Code, wie etwa einen Matrix-Code, z.B. einen QR-Code, oder einen Punktcode. Ferner kann es sich um einen zusammengesetzten Code (Composite-Codes) wie etwa einen Doppelcode handeln. Ein Doppelcode setzt sich beispielsweise zusammen aus einem linearen Barcode und einem zusätzlichen zweidimensionalen Code. Ferner kann es sich um einen eindimensionalen Barcode, welcher zusätzlich die zweite Dimension in Form von unterschiedlich langen Strichen zur Codierung nutzt. Auch höherdimensionale Codes mit drei oder mehr Dimensionen können implementiert werden, etwa über eine Verwendung von unterschiedlichen Farben.

Bei dem maschinenlesbaren Code kann es sich ferner um in einem Speicher, etwa eines Chips oder eines RFID-Tags, gespeicherte Daten handeln, welche mit einem Lesegerät ausgelesen werden können.

Nach Ausführungsformen umfasst der maschinenlesbare Code eine Signatur der Daten der Urkunde mit einem privaten kryptografischen Schlüssel.

Nach Ausführungsformen umfasst das Verfahren ferner:
- Empfangen eines vierten Datensatzes zum Eintragen in die Blockchain durch den ersten Blockchain-Server des Blockchain-Netzwerks, wobei der vierte Datensatz Daten einer ausgestellten dritten elektronischen Urkunde entsprechend der ersten Spezifikation der ersten hoheitlichen Institution oder entsprechend einer vierten Spezifikation einer vierten von der Mehrzahl von hoheitlichen Institutionen nicht umfassten hoheitlichen Institution umfasst,
- Ausführen vierter Programminstruktionen des ersten Programmmoduls durch den ersten Blockchain-Server, wobei das Ausführen der vierten Programminstruktionen ein Prüfen des vierten Datensatzes durch den ersten Blockchain-Server umfasst, ob der vierte Datensatz ein oder mehrere von dem ersten Programmmodul festgelegte zweite Voraussetzungen erfüllt, falls der vierte Datensatz die zweiten Voraussetzungen erfüllt, ein Hinzufügen des vierten Datensatzes zu einem vierten zusätzlichen Block der Blockchain.

Ausführungsformen können den Vorteil haben, dass bereits ausgestellte Urkunden, wie etwa Geburtsurkunden, nachträglich in der Blockchain ergänzt werden können. Insbesondere können beispielsweise Geburtsurkunden anderer hoheitlicher Institutionen, welche nicht zu den das Blockchain-Netzwerk betreibenden hoheitlichen Institutionen gehören, in der Blockchain nachgetragen werden. Dies kann beispielsweise im Zuge von Visum-, Asyl- und/oder Einbürgerungsverfahren von Vorteil sein.

Nach Ausführungsformen sind die vierten Programminstruktionen und zweiten Voraussetzungen identisch zu den ersten Programminstruktionen und ersten Spezifikation. Ausführungsformen können den Vorteil haben, dass sie ein effektives und effizientes Verfahren zur Digitalisierung, d.h. elektronischen Erfassung, von bestehenden Dokumenten bereitstellen.

Nach Ausführungsformen umfasst das Verfahren ferner:
- Empfangen eines fünften Datensatzes zum Eintragen in die Blockchain durch den ersten Blockchain-Server des Blockchain-Netzwerks, wobei der fünfte Datensatz einen Identifikator eines unter Verwendung des ersten Datensatzes ausgestellten körperlichen ID-Dokuments und den Identifikator des ersten Datensatzes umfasst,
- Ausführen fünfter Programminstruktionen des ersten Programmmoduls durch den ersten Blockchain-Server, wobei das Ausführen der fünften Programminstruktionen ein Prüfen des fünften Datensatzes durch den ersten Blockchain-Server umfasst, ob der fünfte Datensatz ein oder mehrere von dem ersten Programmmodul festgelegte dritte Voraussetzungen erfüllt, falls der fünfte Datensatz die dritten Voraussetzungen erfüllt, ein Hinzufügen des fünften Datensatzes zu einem fünften zusätzlichen Block der Blockchain.

Ausführungsformen können den Vorteil haben, dass die Blockchain Informationen bereitstellen kann, welche körperliche ID-Dokumente auf Basis der elektronischen Urkunde, die in der Blockchain manipulationssicher gespeichert ist, ausgestellt werden. Beispielsweise kann auf Basis einer in der Blockchain gespeicherten Geburtsurkunde ein Ausweis, wie etwa ein Kinderpass, ein Personalausweis und/oder ein Reisepass, oder ein Führerschein ausgestellt werden.

Nach Ausführungsformen werden auf analoge Weise Ausstellungen von körperlichen Versionen der in der Blockchain gespeicherten elektronischen Urkunde vermerkt. Somit kann anhand der Blockchain stets nachvollzogen, wie viele körperlichen Versionen einer elektronischen Urkunde ausgegeben wurden. Als Identifikatoren der körperlichen Versionen einer elektronischen Urkunde kann beispielsweise jeweils eine fortlaufende Nummer oder eine Zufallszahl dienen. Nach Ausführungsformen wird auf analoge Weise ein Verlust einer der ausgestellten und in der Blockchain registrierten körperlichen Version der elektronischen Urkunde vermerkt. Durch einen solchen Vermerk wird die entsprechende körperliche Version der elektronischen Urkunde ungültig.

Nach Ausführungsformen umfasst das Verfahren ferner ein Ausstellen des körperlichen ID-Dokuments unter Verwendung des ersten Datensatzes, wobei das ID-Dokument einen maschinenlesbaren Code umfasst. Der maschinenlesbare Code umfasst zumindest einen der folgenden Identifikatoren: den Identifikator des ersten Datensatzes, den Identifikator des ersten Datensatzes oder einen Identifikator des fünften Datensatzes.

Ausführungsformen können den Vorteil haben, dass anhand eines vorgelegten körperlichen Dokuments effektiv und effizient überprüft werden kann, auf Basis welcher Urkunde, z. B. Geburtsurkunde, das entsprechende ID-Dokument ausgestellt wurde und/oder ob die von dem entsprechenden körperlichen ID-Dokument umfassten Angaben mit den von der elektronischen Urkunde beurkundeten Angaben übereinstimmen. Eine Überprüfung kann beispielsweise durch einen automatischen Abgleich der Inhalte des körperlichen ID-Dokuments der durch das entsprechende ID-Dokument identifizierten von der Blockchain bereitgestellten elektronischen Urkunde erfolgen. Hierzu wird beispielsweise der von dem körperlichen ID-Dokument bereitgestellte Inhalt, etwa durch Einscannen oder Auslesen aus einem auslesbaren elektronischen Speichermedium, erfasst und mit den in der Blockchain abgespeicherten Angaben des elektronischen Dokuments verglichen. Bei einer Übereinstimmung stellt die in der Blockchain elektronische Urkunde eine manipulationssichere Bestätigung der Angaben des vorgelegten ID-Dokuments dar.

Bei dem maschinenlesbaren Code kann es sich beispielsweise um einen ein- oder zweidimensionalen graphischen Code handeln, welcher mittels eines optoelektronischen Lesegeräts lesbar ist. Der Code kann gängige Schrift-, Zahl- und/oder Sonderzeichen umfassen. ferner kann der Code geometrische Formen, wie etwa Striche und Punkte unterschiedlicher Dimensionierung umfassen. Bei dem Code handelt es sich beispielsweise um einen eindimensionalen Strichcode, einen gestapelten eindimensionalen Strichcode, einen Array-Code, wie etwa einen Matrix-Code, z.B. einen QR-Code, oder einen Punktcode. Ferner kann es sich um einen zusammengesetzten Code (Composite-Codes) wie etwa einen Doppelcode handeln. Ein Doppelcode setzt sich beispielsweise zusammen aus einem linearen Barcode und einem zusätzlichen zweidimensionalen Code. Ferner kann es sich um einen eindimensionalen Barcode, welcher zusätzlich die zweite Dimension in Form von unterschiedlich langen Strichen zur Codierung nutzt. Auch höherdimensionale Codes mit drei oder mehr Dimensionen können implementiert werden, etwa über eine Verwendung von unterschiedlichen Farben.

Bei dem maschinenlesbaren Code kann es sich ferner um in einem Speicher, etwa eines Chips oder eines RFID-Tags, gespeicherte Daten handeln, welche mit einem Lesegerät ausgelesen werden können.

Unter einem "ID-Dokument" wird insbesondere ein Ausweis- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Gesundheitskarte, oder einen Firmenausweis, eine Chipkarte, Bankkarte oder Kreditkarte. Insbesondere kann es sich bei dem ID-Dokument um ein Machine-Readable Travel Document, wie beispielsweise von der Internationalen Luftfahrtbehörde (ICAO) und/oder dem BSI standardisiert, handeln.

Nach Ausführungsformen umfasst das Verfahren ferner ein Ausstellen des körperlichen Dokuments unter Verwendung des ersten Datensatzes, wobei das Dokument einen maschinenlesbaren Code umfasst. Der maschinenlesbare Code umfasst zumindest einen der folgenden Identifikatoren: den Identifikator des ersten Datensatzes, den Identifikator des ersten Datensatzes oder einen Identifikator des fünften Datensatzes.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Nach Ausführungsformen umfasst das Verfahren ferner:
- Empfangen einer Leseanfrage zum Lesen eines der Datensätze der Blockchain durch den ersten Blockchain-Server, wobei die Leseanfrage signiert ist,
- Prüfen durch den ersten Blockchain-Server unter Verwendung eines zweiten öffentlichen kryptografischen Schlüssels, ob die Signatur der Leseanfrage gültig ist,
- falls die Signatur der Leseanfrage gültig ist, Senden einer Kopie des angefragten Datensatzes an einen Absender der Leseanfrage.

Ausführungsformen können den Vorteil haben, dass sie ein effizientes und effektives Verfahren zum Auslesen von Datensätzen aus der Blockchain bereitstellen. Insbesondere kann so ein Verfahren zur Zugriffskontrolle und -beschränkung auf die in der Blockchain manipulationssicher gespeicherten Daten implementiert werden. Beispielsweise umfassen alle Blockchain-Server des Blockchain-Netzwerks eine vollständige Kopie der Blockchain. Um die elektronische Urkunde vorzulegen, die Gültigkeit der Angaben einer körperlichen Version der elektronischen Urkunde nachzuweisen oder die Gültigkeit von Angaben nachzuweisen, welche die elektronische Urkunde beurkundet und auf welchen ein weiteres Dokument beruht, genügt mithin eine Identifikation der entsprechenden elektronischen Urkunde, welche manipulationsschier in der Blockchain gespeichert ist.

Beispielsweise sind alle einer elektronischen Urkunde zugeordneten Einträge in der Blockchain mit einem Identifikator der elektronischen Urkunde versehen. Auf Basis des entsprechenden Identifikators kann über eine Leseanfrage ein Datensatz mit den Daten der in der Blockchain gespeicherten elektronischen Urkunde abgerufen werden. Der entsprechende Identifikator kann beispielsweise in Form eines maschinenlesbaren Codes von der entsprechenden körperlichen Version der elektronischen Urkunde oder einem entsprechenden körperlichen Dokument, welches auf der Urkunde beruht, bereitgestellt werden. Alternativerweise kann der entsprechende Identifikator aber auch in anderer Form bereitgestellt werden. So kann er etwa als maschinenlesbarer Code in Unterlagen, wie etwa Bewerbungsunterlagen, angegeben werden oder in einem Speicher eines mobilen tragbaren Kommunikationsgeräts mitgeführt werden. Wird die elektronische Urkunde benötigt, so kann der Identifikator von dem mobilen tragbaren Kommunikationsgerät gesendet, aus dem Speicher des mobilen tragbaren Kommunikationsgeräts ausgelesen oder auf einem Display des mobilen tragbaren Kommunikationsgeräts angezeigt werden.

Nach Ausführungsformen wird der zweite öffentliche kryptografische Schlüssel zur Prüfung der Signatur der Leseanfrage von der Blockchain zur Verfügung gestellt. Ausführungsformen können den Vorteil haben, dass die Blockchain eine eigenständige PKI zum Überprüfen von Leseberechtigungen zum Lesen von Daten aus der Blockchain bereitstellt.

Nach Ausführungsformen umfasst das Verfahren ferner:
- Empfangen einer Anfrage nach einer Kopie der Blockchain durch den ersten Blockchain-Server, wobei die Anfrage signiert ist,
- Prüfen durch den ersten Blockchain-Server unter Verwendung eines dritten öffentlichen kryptografischen Schlüssels, ob die Signatur der Anfrage gültig ist,
- falls die Signatur der Anfrage gültig ist, Senden der Kopie der Blockchain an einen Absender der Anfrage.

Ausführungsformen können den Vorteil haben, dass neben dem Blockchain-Server, welche eine Berechtigung zum Eintragen zusätzlicher Blöcke in die Blockchain besitzt, weitere Computersysteme eine vollständige Kopie der Blockchain zu Lesezwecken umfassen können. Nach Ausführungsformen wird der dritte öffentliche kryptografische Schlüssel zur Prüfung der Signatur der Anfrage nach einer Kopie der Blockchain von der Blockchain zur Verfügung gestellt.

Nach Ausführungsformen umfasst das Verfahren auf eine Änderung der Blockchain hin, ferner ein Senden einer Kopie der geänderten Blockchain an einen registrierten Empfänger durch den ersten Blockchain-Server. Ausführungsformen können den Vorteil haben, dass weitere Computersysteme, bei welchen es sich um keine Blockchain-Server handelt, stets über eine aktuelle Version der Blockchain zu Lesezwecken verfügen.

Nach Ausführungsformen ist der registrierten Empfänger in der Blockchain eingetragen. Ausführungsformen können den Vorteil haben, dass beispielsweise von den Blockchain-Servern anhand der Blockchain in effektiver und effizienter Weise festgestellt werden kann, welche zusätzliche Computersysteme mit einer entsprechenden Kopie einer aktualisierten Version der Blockchain zu versehen sind.

Nach Ausführungsformen umfasst das Verfahren ferner:
- Empfangen einer ersten Registrierungsanforderung zum Registrieren eines Empfängers von Kopie der Blockchain im Fall einer Änderung der Blockchain durch den ersten Blockchain-Server, wobei die erste Registrierungsanforderung signiert ist,
- Prüfen durch den ersten Blockchain-Server unter Verwendung eines vierten öffentlichen kryptografischen Schlüssels, ob die Signatur der ersten Registrierungsanforderung gültig ist,
- falls die Signatur der ersten Registrierungsanforderung gültig ist, Registrieren des Empfängers in der Blockchain, wobei das Registrieren ein Hinzufügen der Adresse des zu registrierenden Empfängers zu einem sechsten zusätzlichen Block der Blockchain umfasst.

Ausführungsformen können den Vorteil haben, dass ein effektives und effizientes Verfahren zum Registrieren von Empfängern von Kopie der Blockchain bereitgestellt wird. Nach Ausführungsformen wird der vierte öffentliche kryptografische Schlüssel zur Prüfung der Signatur der ersten Registrierungsanforderung von der Blockchain zur Verfügung gestellt.

Nach Ausführungsformen umfasst das Verfahren ferner:
- Empfangen einer zweiten Registrierungsanforderung zum Eintragen eines von der Blockchain bereitzustellenden öffentlichen kryptografischen Schlüssel durch den ersten Blockchain-Server, wobei die zweite Registrierungsanforderung signiert ist,
- Prüfen durch den ersten Blockchain-Server unter Verwendung eines fünften öffentlichen kryptografischen Schlüssels, ob die Signatur der zweiten Registrierungsanforderung gültig ist,
- falls die Signatur der zweiten Registrierungsanforderung gültig ist, Eintragen des bereitzustellenden öffentlichen kryptografischen Schlüssels in die Blockchain, wobei des bereitzustellenden öffentlichen kryptografischen Schlüssels zu einem siebten zusätzlichen Block der Blockchain umfasst.

Ausführungsformen können den Vorteil haben, dass ein effektives und effizientes Verfahren zum Bereitstellen von öffentlichen Schlüsseln in der Blockchain implementiert wird. Das entsprechende Verfahren kann beispielsweise auf einer hierarchischen Autorisierung beruhen. So können beispielsweise im Zuge des Einbringens der Programmmodule in die Blockchain von den die Programmmodule einbringenden Institutionen ein oder mehrere Root-Instanzen in Form von öffentlichen kryptografischen Schlüsseln in der Blockchain implementiert werden. Registrierungsanforderungen zum Eintragen von weiteren öffentlichen Schlüsseln in die Blockchain können mit einer Signatur, welche unter Verwendung eines privaten Schlüssels eines kryptografischen Schlüsselpaars, von welchem der öffentliche Schlüssel bereits in der Blockchain eingetragen wurde, autorisiert werden. Somit kann die Blockchain eine eigenständige PKI implementieren. Nach Ausführungsformen wird der fünfte öffentliche kryptografische Schlüssel zur Prüfung der Signatur der zweiten Registrierungsanforderung von der Blockchain zur Verfügung gestellt.

Nach Ausführungsformen ist jedes der Programmmodule einer Spezifikation zugeordnet, welche genau einer der unterschiedlichen hoheitlichen Institutionen zugeordnet ist. Ausführungsformen können den Vorteil haben, dass für jede hoheitliche Institution ein individuelles Programmmodul von der Blockchain bereitgestellt wird. Handelt es sich bei den hoheitlichen Institutionen beispielsweise um hoheitliche Institutionen unterschiedlicher Staaten, so behält jeder Staat die volle Verfügungsgewalt über elektronische Urkunden, welche eine ihm zugeordnete hoheitliche Institution ausstellt. Dies hoheitliche Institution kann beispielsweise weitere öffentliche Behörden, wie etwa Standesämter, dazu autorisieren innerhalb der Grenzen ihrer Amtsbefugnisse entsprechende elektronische Urkunden, etwa Geburtsurkunden, in der vorgeschriebenen Form auszustellen bzw. in die Blockchain einzutragen. Ebenso kann die hoheitliche Institution ein oder mehreren mit öffentlichem Glauben versehenen Person, wie etwa Notaren, Konsuln, Gerichtsvollziehern, etc., dazu autorisieren innerhalb des ihnen zugewiesenen Geschäftskreises entsprechende elektronische Urkunden in der vorgeschriebenen Form ausgestellt auszustellen bzw. in die Blockchain einzutragen.

Nach Ausführungsformen ist jeder der Blockchain-Server genau einer der unterschiedlichen hoheitlichen Institutionen zugeordnet. Ausführungsformen können den Vorteil haben, dass jeder hoheitlichen Institution ein Blockchain-Server zugeordnet ist. Mit anderen Worten verfügt jede hoheitliche Institution über einen eigenen Blockchain-Server als Teil des Blockchain-Netzwerks zum Eintragen von elektronischen Urkunden. Somit behält beispielsweise im Fall von hoheitlichen Institutionen unterschiedlicher Staaten jeder dieser Staaten die volle Verfügungsgewalt über das Eintragungsverfahren von elektronischen Urkunden seiner hoheitlichen Institution, wobei sich diese physikalische Verfügungsgewalt auch auf die elektronische Implementierung des zugrunde liegenden Hardwaresystems, d.h. das Blockchain-netzwerk.

Nach Ausführungsformen ist zumindest eines der Programmmodule einer Spezifikation zugeordnet, welche mehr als einer der unterschiedlichen hoheitlichen Institutionen zugeordnet ist. Ausführungsformen können den Vorteil haben, dass mehrere unterschiedliche hoheitliche Institutionen beispielsweise dasselbe Programmmodul nutzen können, um elektronische Urkunden mit derselben Spezifikation manipulationssicher auszustellen und in der Blockchain zu speichern.

Nach Ausführungsformen ist jeder der Blockchain-Server mehr als einer der unterschiedlichen hoheitlichen Institutionen zugeordnet. Ausführungsformen können den Vorteil haben, dass mehrere unterschiedliche hoheitliche Institutionen denselben Blockchain-Server zum Eintragen elektronischer Urkunden in die Blockchain nutzen können.

Ausführungsformen umfassen ein Blockchain-Server eines Blockchain-Netzwerks zum manipulationssicheren Ausstellen und Speichern von elektronischen Urkunden entsprechend einer Spezifikation einer hoheitlichen Institution einer Mehrzahl von hoheitlichen Institutionen unter Verwendung einer von dem Blockchain-Netzwerk bereitgestellten Blockchain. Der Blockchain-Server ist der hoheitlichen Institution zugeordnet. Das Blockchain-Netzwerk umfasst eine Mehrzahl von Blockchain-Servern, welche jeweils einer der hoheitlichen Institutionen zugeordnet sind. Die Blockchain umfasst eine Mehrzahl von Programmmodulen, wobei die Programmmodule jeweils einer der Spezifikationen zugeordnet sind.

Der Blockchain-Server ist konfiguriert zum:
- Empfangen eines Datensatzes zum Eintragen in die Blockchain, wobei der Datensatz Daten einer auszustellenden elektronischen Urkunde entsprechend der Spezifikation der hoheitlichen Institution umfasst,
- Ausführen von Programminstruktionen eines Programmmoduls der Mehrzahl von Programmmodulen, wobei das entsprechende Programmmodul zum Ausstellen von elektronischen Urkunden entsprechend der Spezifikation konfiguriert ist, wobei das Ausführen der Programminstruktionen ein Prüfen des Datensatzes durch den Blockchain-Server umfasst, ob der Datensatz die Spezifikation erfüllt, falls der Datensatz die Spezifikation erfüllt, ein Hinzufügen des Datensatzes zu einem zusätzlichen Block der Blockchain.

Nach Ausführungsformen ist der Blockchain-Server dazu konfiguriert ein oder mehrere der zuvor genannten Ausführungsformen des Verfahrens zum manipulationssicheren Ausstellen und Speichern einer Mehrzahl von elektronischen Urkunden unter Verwendung der Blockchain auszuführen.

Ausführungsformen umfassen ein Blockchain-Netzwerk zum manipulationssicheren Ausstellen und Speichern von elektronischen Urkunden unter Verwendung einer von dem Blockchain-Netzwerk bereitgestellten Blockchain. Die elektronischen Urkunden entsprechen jeweils einer Spezifikation einer vorgegebenen Menge von Spezifikationen, wobei die Spezifikationen der Menge von Spezifikationen unterschiedlichen hoheitlichen Institutionen zugeordnet sind. Das Blockchain-Netzwerk umfasst eine Mehrzahl von Blockchain-Servern, wobei die Blockchain-Server dazu konfiguriert sind, zusätzliche Blöcke für die Blockchain zu erstellen und in die Blockchain einzutragen. Die Blockchain-Server sind unterschiedlichen hoheitlichen Institutionen zugeordnet, wobei die Blockchain eine Mehrzahl von Programmmodulen umfasst. Die Programmmodule sind jeweils einer der Spezifikationen zugeordnet sind zugeordnet.

Das Blockchain-Netzwerk ist konfiguriert zum:
- Empfangen eines Datensatzes zum Eintragen in die Blockchain durch einen Blockchain-Server des Blockchain-Netzwerks, wobei der Datensatz Daten einer auszustellenden elektronischen Urkunde entsprechend einer Spezifikation einer hoheitlichen Institution umfasst, wobei der Blockchain-Server der hoheitlichen Institution zugeordnet ist,
- Ausführen Programminstruktionen eines Programmmoduls der Mehrzahl von Programmmodulen durch den Blockchain-Server, wobei das Programmmodul zum Ausstellen von elektronischen Urkunden entsprechend der Spezifikation konfiguriert ist, wobei das Ausführen der Programminstruktionen ein Prüfen des Datensatzes durch den Blockchain-Server umfasst, ob der Datensatz die Spezifikation erfüllt, falls der Datensatz die Spezifikation erfüllt, ein Hinzufügen des Datensatzes zu einem zusätzlichen Block der Blockchain.

Nach Ausführungsformen ist das Blockchain-Netzwerk dazu konfiguriert ein oder mehrere der zuvor genannten Ausführungsformen des Verfahrens zum manipulationssicheren Ausstellen und Speichern einer Mehrzahl von elektronischen Urkunden unter Verwendung der Blockchain auszuführen.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Im Weiteren werden Ausführungsformen der Erfindung mit Bezugnahme auf die Zeichnungen näher erläutert. Es zeigen
- Figuren 1: schematische Blockdiagramme einer ersten Ausführungsform eines exemplarischen Systems zum manipulationssicheren Ausstellen und Speichern von elektronischen Urkunden unter Verwendung einer Blockchain,
- Figur 2: ein schematisches Blockdiagramm einer Ausführungsform einer exemplarischen körperlichen Urkunde,
- Figur 3: ein schematisches Blockdiagramm einer Ausführungsform eines exemplarischen körperlichen ID-Dokuments,
- Figur 4: ein Flussdiagramm einer Ausführungsform eines exemplarischen Verfahrens zum Ausstellen einer elektronischen Urkunde unter Verwendung der Blockchain,
- Figur 5: ein Flussdiagramm einer Ausführungsform eines exemplarischen Verfahrens zum Ergänzen eines elektronischen Dokuments in der Blockchain,
- Figur 6: ein Flussdiagramm einer Ausführungsform eines exemplarischen Verfahrens zum Registrieren eines ID-Dokuments, welches unter Verwendung eines von der Blockchain bereitgestellten elektronischen Urkunde ausgestellt wurde,
- Figur 7: ein Flussdiagramm einer Ausführungsform eines exemplarischen Verfahrens zum Auslesen von Datensätzen aus der Blockchain,
- Figur 8: ein Flussdiagramm einer Ausführungsform eines exemplarischen Verfahrens zum Registrieren von öffentlichen kryptografischen Schlüsseln in der Blockchain, und
- Figur 9: ein Flussdiagramm einer Ausführungsform eines exemplarischen Verfahrens zum Registrieren von Empfängern von Updates der Blockchain.

Elemente der nachfolgenden Ausführungsformen, die einander entsprechen, werden mit denselben Bezugszeichen gekennzeichnet.

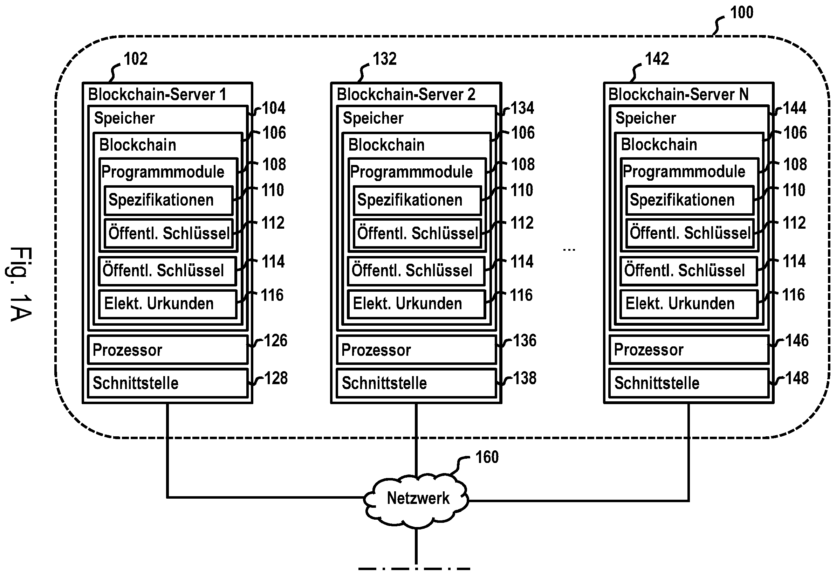

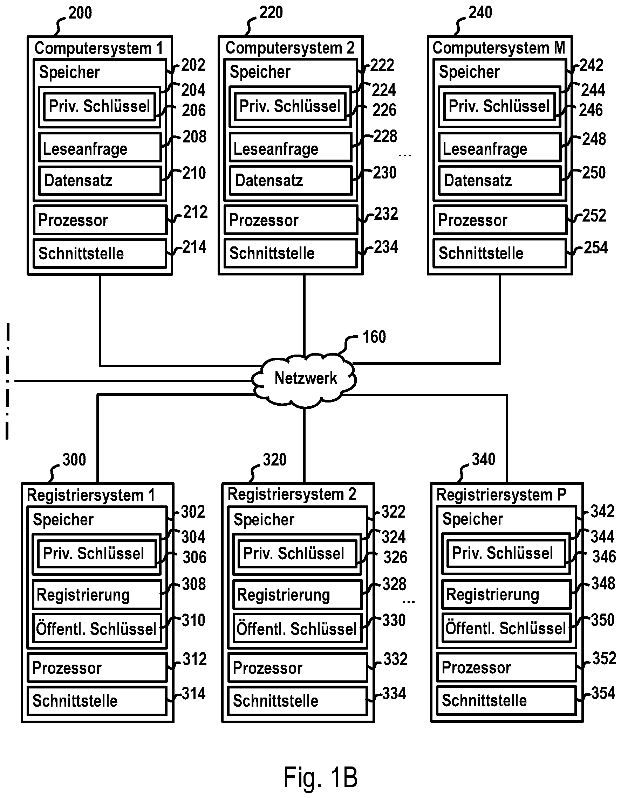

Figuren 1A und 1B zeigen eine Ausführungsform eines exemplarischen Systems zum manipulationssicheren Ausstellen und Speichern von elektronischen Urkunden 116 unter Verwendung einer Blockchain 106. Die Blockchain 106 wird von einem Blockchain-Netzwerk 100 bereitgestellt, welches eine Mehrzahl von N Blockchain-Servern 102, 132, 142 umfasst. Die einzelnen Blockchain-Servern 102, 132, 142 des Blockchain-Netzwerks 100 umfassen jeweils einen Speicher 104, 134, 144, in welchem jeweils eine Kopie die Blockchain 106 gespeichert ist. Ferner umfasst die Blockchain 106 eine Mehrzahl von Programmmodulen 108, welche jeweils eine Spezifikation 110 für in der Blockchain 106 zu speichernde elektronische Urkunden 116 bereitstellt. Ferner können die Programmmodule 108 jeweils einen oder mehrere öffentliche kryptografische Schlüssel 112 bereitstellen, anhand derer Registrierungsanfragen zum Registrieren weiterer öffentlicher kryptografischer Schlüssel 114 in der Blockchain 106 auf ihre Berechtigung geprüft werden können. So kann die Blockchain 106 beispielsweise eine eigenständige PKI zum hierarchischen Autorisieren von Ausstellern von elektronischen Urkunden 116 implementieren.

Die Server 102, 132, 142 umfassen ferner jeweils einen Prozessor 126, 136, 146 zum Ausführen von Programminstruktionen, welche von den Programmmodulen 108 der Blockchain 106 bereitgestellt werden. Zudem umfassen die Blockchain-Server 102, 132, 142 jeweils eine Kommunikationsschnittstelle 128, 138, 148 zum Empfangen von Datensätzen zur Eintragung in der Blockchain 106 über das Netzwerk 160. Nach Ausführungsformen werden Datensätze zum Ausstellen von elektronischen Urkunden 116, welche in die Blockchain 106 eingetragen werden, von den Blockchain-Servern 102, 132, 142 über das Netzwerk 160 von Computersystemen 200, 220, 240 empfangen. Nach alternativen Ausführungsformen werden die entsprechenden Datensätze zum Ausstellen elektronischer Urkunden 116 von den Blockchain-Servern 102, 132, 142 selbst erstellt.

Die Blockchain-Server 102, 132, 142 dienen somit sowohl zum Speichern der Blockchain 106 als auch zum Eintragen von elektronischen Urkunden 116 in die Blockchain 106. Ihre jeweilige Berechtigung zum Eintragen eines Blocks in die Blockchain 106 können die Blockchain-Server 102, 132, 142 beispielsweise jeweils durch eine Signatur des von ihnen erstellten zusätzlichen Blocks für die Blockchain 106 nachweisen. Hierzu verfügen die einzelnen Blockchain-Server 102, 132, 142 beispielsweise über einen privaten kryptografischen Signaturschlüssel. Die entsprechenden privaten kryptografischen Schlüssel sind beispielsweise jeweils in einem geschützten Speicherbereich der elektronischen Speicher 104, 134, 144 gespeichert. Nach alternativen Ausführungsformen sind die von den Blockchain-Servern 102, 132, 142 erzeugten zusätzlichen Blöcke für die Blockchain nicht durch die Blockchain-Server 102, 132, 142 signiert, sondern weisen ihre Korrektheit ausschließlich durch ihre Konformität mit den von den Programmmodulen 108 definierten Spezifikationen 110 nach. Die entsprechenden Spezifikationen 110 umfassen beispielsweise eine Signatur der einzelnen von den Blöcken umfassten Datensätze mit privaten kryptografischen Schlüsseln, welche zu kryptografischen Schlüsselpaaren gehören, deren öffentliche kryptografische Schlüssel 114 in der Blockchain 108 gespeichert sind.

Datensätze 210, 230, 250 zum Eintragen in der Blockchain 106 werden beispielsweise von einem oder mehreren Computersystemen 200, 220, 240 erstellt und über das Netzwerk 160 an das Blockchain-Netzwerk 100 zur Eintragung in der Blockchain 106 gesendet. Nach Ausführungsformen erfolgt das Senden der Datensätze 210, 230, 250 beispielsweise über Kommunikationsverbindungen, welche Ende-zu-Ende verschlüsselt sind. Die Computersysteme 200, 220, 240 umfassen beispielsweise jeweils einen elektronischen Speicher 202, 222, 242, in welchem die einzutragenden Datensätze 210, 230, 250 gespeichert sind. Ferner umfassen die Computersysteme 200, 220, 240 jeweils einen Prozessor 212, 232, 252 zum Ausführen von Programminstruktionen. Ein Ausführen der entsprechenden Programminstruktionen führt beispielsweise zur Erstellung der Datensätze 210, 230, 250. Die entsprechenden Datensätze 210, 230, 250 werden über Kommunikationsschnittstellen 214, 234, 254 der Computersysteme 200, 220, 240 und das Netzwerk 160 an das Blockchain-Netzwerk 100 gesendet.

Nach Ausführungsformen umfassen die elektronischen Speicher 202, 222, 242 jeweils geschützte Speicherbereiche 204, 224, 244 mit einem privaten Schlüssel 206, 226, 246. Die privaten kryptografischen Schlüssel 206, 226, 246 sind jeweils dem entsprechenden Computersystem 200, 220, 240 und/oder deren Nutzer zugeordnet, wobei es sich bei dem Nutzer sowohl um eine natürliche Person als auch um eine juristische Person handeln kann. Mit den privaten Schlüsseln 206, 226, 246 können die Datensätze 210, 230, 250 signiert werden. Handelt es sich bei den privaten kryptografischen Schlüsseln 206, 226, 246 um private kryptografische Schlüssel eines asymmetrischen Schlüsselpaars, dessen öffentlicher kryptografischer Schlüssel 114 in der Blockchain 106 registriert ist, so dient die Signatur mit dem entsprechenden privaten Schlüssel 206, 226, 246 als Nachweis einer Autorisierung zum Eintragen des entsprechenden Datensatzes 210, 230, 250 in die Blockchain 106.

Ferner können die Computersysteme 200, 220, 240 dazu konfiguriert sein, durch Ausführen von Programminstruktionen unter Verwendung der Prozessoren 212, 222, 252 Leseanfragen 208, 228, 248 zum Auslesen elektronischer Urkunden aus der Blockchain 106 bzw. den elektronischen Urkunden zugeordneter Einträge an das Blockchain-Netzwerk zu senden. Beispielsweise sind die Leseanfragen 208, 228, 248 mit den privaten Schlüsseln 206, 226, 246 signiert, um die Leseberechtigung der Computersysteme 200, 220, 240 nachzuweisen. Werden die entsprechenden Leseanfragen 208, 228, 248 von einem Blockchain-Server 102, 132, 142 des Blockchain-Netzwerks 100 über das Netzwerk 160 empfangen, so prüft der entsprechende Blockchain-Server 102, 122, 142 durch Ausführen eines der Programmmodule 108 die Autorisierung der Signatur der entsprechenden Leseanfrage. Ist das anfragende Computersystem 200, 220, 240 zum Lesen der angefragten Datensätze berechtigt, so werden diese von dem entsprechenden Blockchain-Server 102, 132, 142 über das Netzwerk 160 an das anfragende Computersysteme 200, 220, 240 in Antwort auf die Leseanfragen 208, 228, 248 gesendet. Nach Ausführungsformen sind die Programmmodule 108 jeweils selektiv bestimmten Blockchain-Servern 102, 132, 142 zugeordnet, sodass nur ein einem bestimmten Programmmodul 108 zugeordneter Blockchain-Server 102, 132, 142 dieses erfolgreich zum Eintragen von elektronischen Urkunden 116 nutzen kann. Nach Ausführungsformen können elektronische Urkunden 116 mit einer bestimmten Spezifikation 110 nur unter Verwendung des dieser Spezifikation 110 zugeordneten Programmmoduls 108 in die Blockchain 106 eingetragen werden. Nach Ausführungsformen können alle Blockchain-Server 102, 132, 142 und/oder alle dazu berechtigten Computersysteme 200, 220, 240 alle Einträge der Blockchain 106 lesen.

Nach Ausführungsformen werden die auszulesenden Datensätze durch einen Identifikator der auszulesenden elektronischen Urkunde 116 bestimmt. Anhand des entsprechenden Identifikators können all diejenigen Blöcke bzw. Einträge in der Blockchain 106 identifiziert werden, welche der auszulesenden elektronischen Urkunde 116 zugeordnet sind. Beispielsweise bilden diese Einträge zusammen die entsprechende elektronische Urkunde 116.

Bei den Leseanfragen 208, 228, 248 kann es sich beispielsweise auch um Leseanfragen zum Auslesen der vollständigen Blockchain 106 handeln. Nach Ausführungsformen kann es sich bei dem Netzwerk 160 um ein öffentliches Netzwerk oder ein privates, d.h. zugriffsbeschränktes, Netzwerk handeln. Beispielsweise kann es sich bei dem Netzwerk 160 um ein Mobilfunknetzwerk handeln, über welches mit einem mobilen Kommunikationsgerät auf die Blockchain zugegriffen werden kann.

Ferner können über das Netzwerk 160 eine oder mehrere Registrierungscomputersysteme 300, 320, 340 mit dem Blockchain-Netzwerk 100 in Kommunikation stehen. Die Registrierungscomputersysteme 300, 320, 340 können beispielsweise jeweils dazu konfiguriert sein, durch Ausführen von Programminstruktionen unter Verwendung der Prozessoren 312, 332, 342 eine Registrierungsanfrage 308, 328, 348 zu erstellen zum Registrieren öffentlicher Schlüssel 114 in der Blockchain 106. Die öffentlichen kryptografischen Schlüssel gehören beispielsweise jeweils mit den privaten kryptografischen Schlüsseln 206, 226, 246 zu gemeinsamen asymmetrischen Schlüsselpaaren. Beispielsweise empfangen die Registrierungscomputersysteme 300, 320, 340 die zu registrierenden öffentlichen Schlüssel 114 von den Computersystemen 200, 220, 240 über das Netzwerk 160. Hierzu werden die entsprechenden Registrierungsanfragen 308, 328, 348 beispielsweise mit privaten kryptografischen Schlüsseln 306, 326, 346, welche in geschützten Speicherbereichen 304, 324, 344 der elektronischen Speicher 302, 322, 342 gespeichert sind, signiert. Handelt es sich bei den entsprechenden privaten kryptografischen Schlüsseln 306, 326, 346 um private kryptografische Schlüssel, die zu kryptografischen Schlüsselpaaren gehören, deren öffentliche kryptografische Schlüssel 112 in der Blockchain 106, insbesondere in den Programmmodulen 108 gespeichert ist, so gilt die signierte Registrierungsanfrage 308, 328, 348 als autorisiert. Auch in dieser Weise kann beispielsweise ein hierarchisches Autorisierungsverfahren unter Verwendung der Blockchain 106 implementiert werden. Nach alternativen Ausführungsformen werden die Funktionen der Registrierungscomputersysteme 300, 320, 340 von den Blockchain-Servern ausgeführt.

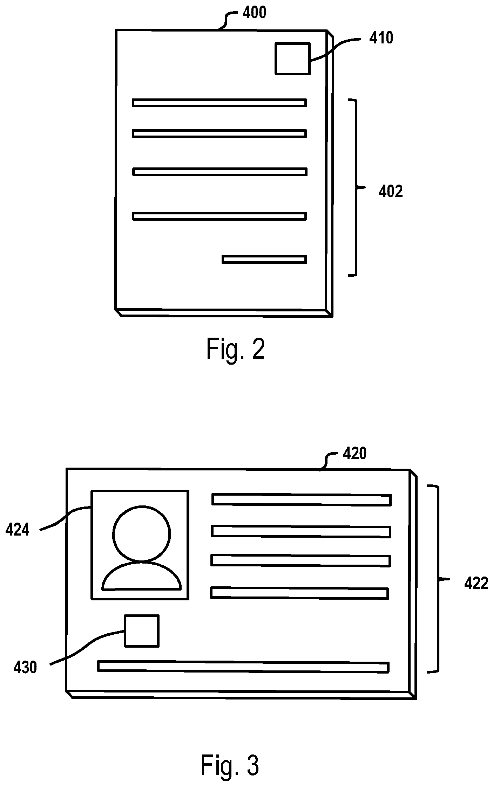

Figur 2 zeigt ein schematisches Blockdiagramm einer Ausführungsform einer körperlichen Version 400 einer in der Blockchain manipulationssicher gespeicherten Urkunde, beispielsweise einer Geburtsurkunde. Die entsprechende Urkunde 400 umfasst Daten 404 sowie einen maschinenlesbaren Code 410 mit einem Identifikator der elektronischen Urkunde, welcher dem körperlichen Dokument 400 entspricht. Der maschinenlesbare Code 410 kann mit einer dafür vorgesehenen Erfassungsvorrichtung, z. B. einem Scanner, einer Kamera oder einem Empfänger ausgelesen werden, gelesen werden. Die Daten 404 der Urkunde 400 können mit den in der Blockchain gespeicherten Daten der elektronischen Urkunde verglichen werden, welche der maschinenlesbare Code 410 identifiziert. Stimmen die Daten 404 der körperlichen Urkunde 400 mit den in der Blockchain manipulationssicher gespeicherten Daten der elektronischen Urkunde überein, ist die körperliche Urkunde 400 gültig.

Figur 3 zeigt ein schematisches Blockdiagramm einer Ausführungsform eines exemplarischen ID-Dokuments, welches unter Verwendung von Daten ausgestellt wurde, welche von der in der Blockchain gespeicherten elektronischen Urkunde beurkundet werden. Bei dem entsprechend ID-Dokument 404 handelt es sich beispielsweise um einen Ausweis, Reisepass, Kinderpass oder Führerschein. Das entsprechende ID-Dokument 420 umfasst beispielsweise ein Lichtbild 424 des Inhabers des ID-Dokuments 420 sowie Daten 422, welche beispielsweise maschinenlesbare Form bereitgestellt werden. Ferner umfasst das ID-Dokument 420 beispielsweise einen maschinenlesbaren Code 430, welcher die elektronische Urkunde in der Blockchain identifiziert unter deren Verwendung das ID-Dokument 420 ausgestellt wurde. So kann überprüft werden, ob die Daten 422 mit den von der zugrunde liegenden Urkunde, z. B. Geburtsurkunde, zumindest teilweise übereinstimmen, z. B. Geburtsort, Geburtsdatum, etc.

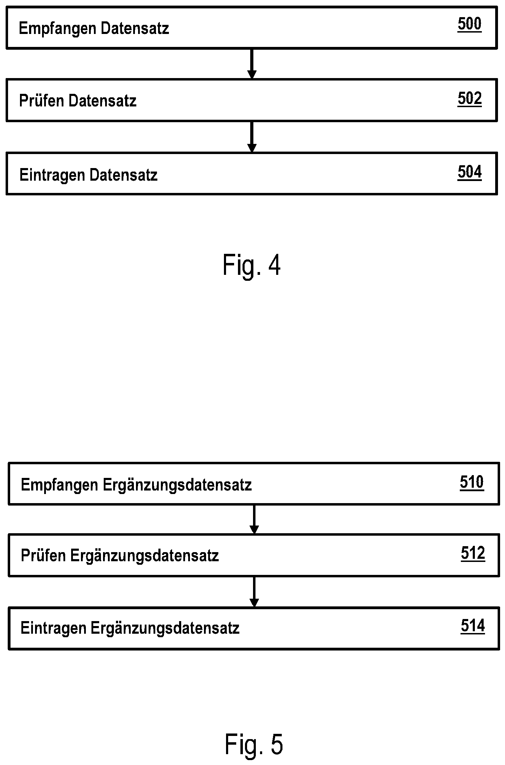

Figur 4 zeigt ein Flussdiagramm einer Ausführungsform eines Verfahrens zum Eintragen von Datensätzen in eine Blockchain. Bei den entsprechenden Datensätzen handelt es sich um Datensätze einer elektronischen Urkunde, welche unter Verwendung der Blockchain manipulationssicher ausgestellt und gespeichert werden soll. In Block 500 empfängt ein Blockchain-Server des Blockchain-Netzwerks einen Datensatz zum Eintragen in die Blockchain. Der Datensatz umfasst Daten einer auszustellenden elektronischen Urkunde entsprechend einer Spezifikation einer hoheitlichen Institution, welcher der empfangende Blockchain-Server zugeordnet ist. In der Blockchain 502 prüft der Blockchain-Server, ob der Datensatz der entsprechenden Spezifikation entspricht. Hierzu führt der Blockchain-Server Programminstruktionen eines Programmmoduls der Blockchain aus, welches zum Ausstellen von elektronischen Urkunden entsprechend dieser Spezifikation konfiguriert ist. Die Spezifikation umfasst beispielsweise eine Bedingung, dass der entsprechende Datensatz eine bestimmte kryptografische Sicherung, beispielsweise eine gültige Signatur aufweist, und/oder einen bestimmten Satz an Daten mit festgelegtem Inhalt umfasst. Falls der empfangene Datensatz die Spezifikation erfüllt, erfolgt in Block 504 die Eintragung des Datensatzes in die Blockchain. Mit Eintragung des Datensatzes in die Blockchain gilt die entsprechende elektronische Urkunde als ausgestellt und kann anhand des Eintrags in der Blockchain auf ihre Echtheit geprüft werden.

Figur 5 zeigt ein Flussdiagramm einer Ausführungsform eines exemplarischen Verfahrens zum Ergänzen von elektronischen Urkunden, welche durch die Blockchain bereitgestellt werden. In Block 510 wird ein Ergänzungsdatensatz mit Daten zur Ergänzung elektronischen Urkunde empfangen. Der entsprechende Ergänzungsdatensatz umfasst beispielsweise einen Identifikator eines Datensatzes der ausgestellten elektronischen Urkunde und/oder der elektronischen Urkunde selbst. In Block 512 wird geprüft, ob der empfangene Ergänzungsdatensatz eine von einem Programmmodul der Blockchain festgelegte Spezifikation zur Ergänzung der ausgestellten elektronischen Urkunde erfüllt. Die entsprechende Spezifikation legt beispielsweise eine bestimmte Signatur des Ergänzungsdatensatzes, z. B. mit einem der elektronischen Urkunde zugeordneten privaten kryptografischen Schlüssel oder mit einem privaten kryptografischen Schlüssel eines in der Blockchain registrierten asymmetrischen Schlüsselpaars, und/oder Ergänzungsdaten fest, welche einen festgelegten Inhalt aufweisen. Die entsprechenden Ergänzungsdaten können beispielsweise zusätzliche Daten umfassen, welche der bereits bestehenden elektronischen Urkunde zusätzlich hinzuzufügen sind und/oder Daten, welche bestehende Daten der Urkunde updaten, d.h. ersetzen, sollen. Erfüllt der Ergänzungsdatensatz die entsprechende Spezifikation, so erfolgt in Block 514 eine Eintragung des Ergänzungsdatensatzes in die Blockchain, womit die bestehende elektronische Urkunde um den Ergänzungsdatensatz ergänzt wird.

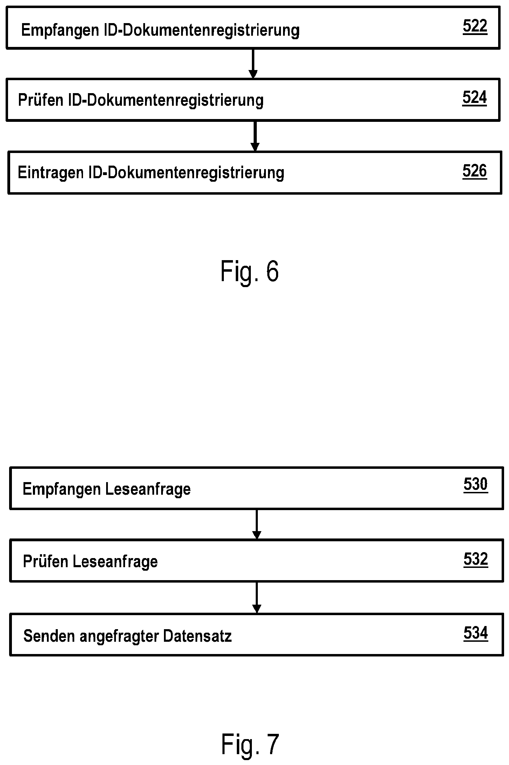

Figur 6 zeigt ein Flussdiagramm einer Ausführungsform eines exemplarischen Verfahrens zum Registrieren von ID-Dokumenten, welche unter Verwendung von elektronischen Urkunden ausgestellt werden, die in der Blockchain manipulationssicher gespeichert sind. In Block 520 wird eine ID-Dokumentenregistrierung empfangen. Eine entsprechende Registrierung für ein ID-Dokument wird beispielsweise erstellt, wenn das entsprechende ID-Dokument unter Verwendung einer in der Blockchain gespeicherten Urkunde, z. B. Geburtsurkunde, ausgestellt wird. In Block 522 wird die ID-Dokumentenregistrierung auf ihre Gültigkeit geprüft. Hierzu wird geprüft, ob ein empfangener Datensatz, mit dessen Aufnahme in die Blockchain das entsprechende Dokument registriert wird, die von einem Programmmodul der Blockchain für eine ID-Dokumentenregistrierung festgelegte Voraussetzung erfüllt. Erfüllt der entsprechende Datensatz die festgelegte Voraussetzung, so erfolgt in Block 524 die Eintragung der entsprechenden Registrierung in die Blockchain. Hierbei umfasst der entsprechende Datensatz beispielsweise einen Identifikator des ausgestellten ID-Dokuments sowie einen Identifikator der von der Blockchain bereitgestellten Urkunde, basierend auf der das ID-Dokument ausgestellt wurde. Die entsprechenden Voraussetzungen umfassen beispielsweise eine gültige Signatur, einen Identifikator des ausgestellten ID-Dokuments und/oder einen gültigen Identifikator einer in der Blockchain eingetragenen gültigen Urkunde.

Figur 7 zeigt ein Flussdiagramm einer Ausführungsform eines beispielhaften exemplarischen Verfahrens zum Auslesen von Datensätze, d.h. Dokumenten aus der Blockchain, d.h. von dem entsprechenden Dokument zugeordneten Einträgen in der Blockchain. In Block 530 wird eine entsprechende Leseanfrage empfangen. Die entsprechende Leseanfrage umfasst beispielsweise einen Identifikator des auszulesenden Dokuments. In Block 532 wird geprüft, ob die Leseanfrage Voraussetzungen erfüllt, welche von einem Programmmodul festgelegt werden, welches ein die Leseanfrage empfangender Blockchain-Server ausführt. Die entsprechenden Voraussetzungen umfassen beispielsweise eine gültige Signatur der Leseanfrage sowie einen von der Leseanfrage bereitgestellten gültigen Identifikator einer gültigen von der Blockchain bereitgestellten Urkunde. Ist das Prüfungsergebnis positiv, so wird in Block 534 der angefragte Datensatz in Antwort auf die Leseanfrage an den Sender der Leseanfrage gesendet.

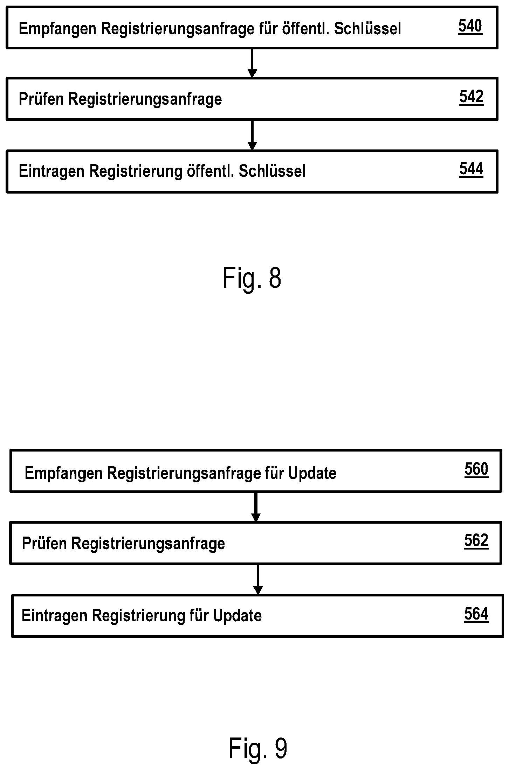

Figur 8 zeigt ein Flussdiagramm einer Ausführungsform eines exemplarischen Verfahrens zum Registrieren von öffentlichen Schlüsseln in der Blockchain. Hierdurch kann eine eigene PKI in der Blockchain hinterlegt werden, d.h. eine hierarchische Autorisierung von Erstellern von Datensätzen zum Eintragen in die Blockchain kann implementiert werden. In Schritt 540 empfängt ein Blockchain-Server des Blockchain-Netzwerks eine Registrierungsanfrage für einen öffentlichen Schlüssel, wobei die Registrierungsanfrage beispielsweise den entsprechenden öffentlichen Schlüssel umfasst. In Block 542 wird die Registrierungsanfrage auf ihre Gültigkeit geprüft. Hierbei führt der empfangene Blockchain-Server beispielsweise ein Programmmodul aus, welches die Blockchain bereitstellt. Eine Gültigkeit der Registrierungsanfrage setzt beispielsweise voraus, dass die Registrierungsanfrage selbst eine gültige Signatur umfasst. Die Gültigkeit der Signatur der Registrierungsanfrage kann beispielsweise mit einem von dem Programmmodul umfassten öffentlichen kryptografischen Schlüssel überprüft werden. Bei dem entsprechenden öffentlichen kryptografischen Schlüssel handelt es sich beispielsweise um den öffentlichen kryptografischen Schlüssel eines asymmetrischen Schlüsselpaars, welches einem Aussteller des Programmmoduls zugeordnet ist und als Root-Instanz dient. Erweist sich die Registrierungsanfrage als gültig, so wird der öffentliche kryptografische Schlüssel in Block 544 in der Blockchain registriert, d.h. in der Blockchain gespeichert. Nach Ausführungsformen wird der öffentliche kryptografische Schlüssel nur als Berechtigungsnachweis für Eintragungen unter Verwendung dieses einen Programmmoduls in der Blockchain gespeichert. In diesem Fall stellt der öffentliche kryptografische Schlüssel keinen gültigen Berechtigungsnachweis für Eintragungen unter Verwendung von anderen Programmmodulen der Blockchain dar.

Figur 9 zeigt ein Flussdiagramm einer Ausführungsform eines exemplarischen Verfahrens zum Registrieren von Empfängern von Updates der Blockchain. Beispielsweise ist die Blockchain nicht nur in den Blockchain-Servern gespeichert, sondern in weiteren Computersystemen, welche durch Updates stets auf dem aktuellen Stand gehalten werden. Mit anderen Worten erfolgt, sobald ein zusätzlicher Block zu der Blockchain hinzugefügt wird, eine Aktualisierung der Blockchain-Kopien, welche in den entsprechenden zusätzlichen Computersystemen gespeichert sind. Hierzu werden nun die zusätzlichen Computersysteme in der Blockchain registriert. In Block 550 empfängt ein Blockchain-Server des Blockchain-Netzwerks eine Registrierungsanfrage zur Registrierung eines Empfängers für Updates. In Block 552 wird die Registrierungsanfrage auf ihre Gültigkeit geprüft. Gültigkeitsvoraussetzung, wie sie von einem von dem Blockchain-Server auf den Empfang der Registrierungsanfrage hin ausgeführten Programmmodul festgelegt werden, ist beispielsweise eine gültige Signatur der Registrierungsanfrage. Die Gültigkeit der Signatur der Registrierungsanfrage kann beispielsweise mit einem öffentlichen kryptografischen Schlüssel, welcher von der Blockchain bereitgestellt wird, geprüft werden. Handelt es sich bei der Signatur um eine gültige Signatur, so erfolgt in Block 554 eine Registrierung des Empfängers für Updates in der Blockchain. Hierzu wird beispielsweise eine Adresse des Empfängers in die Blockchain eingetragen. Im Fall einer Aktualisierung der Blockchain, d.h. eines Hinzufügens eines zusätzlichen Blocks zu der Blockchain im Zuge eines Ausführens eines der Programmmodule, wird automatisch eine Kopie der Blockchain oder des zusätzlichen Blocks an die in der Blockchain eingetragenen Empfänger für solche Aktualisierungen gesendet. Hierzu werden die in der Blockchain registrierten Adressen verwendet.

### Bezugszeichenliste

- 100: Blockchain-Netzwerk
- 102: Blockchain-Server
- 104: Speicher
- 106: Blockchain
- 108: Programmmodul
- 110: Spezifikation
- 112: öffentlicher Schlüssel
- 114: öffentlicher Schlüssel
- 116: elektronische Urkunde
- 126: Prozessor
- 128: Kommunikationsschnittstelle
- 132: Blockchain-Server
- 134: Speicher
- 136: Prozessor
- 138: Kommunikationsschnittstelle
- 142: Blockchain-Server
- 144: Speicher
- 146: Prozessor
- 148: Kommunikationsschnittstelle
- 160: Netzwerk
- 200: Computersystem
- 202: Speicher
- 204: geschützter Speicherbereich
- 206: privater Schlüssel
- 208: Leseanfrage
- 210: Datensatz
- 212: Prozessor
- 214: Kommunikationsschnittstelle
- 220: Computersystem
- 222: Speicher
- 224: geschützter Speicherbereich
- 226: privater Schlüssel
- 228: Leseanfrage
- 230: Datensatz
- 232: Prozessor
- 234: Kommunikationsschnittstelle
- 240: Computersystem
- 242: Speicher
- 244: geschützter Speicherbereich
- 246: privater Schlüssel
- 248: Leseanfrage
- 250: Datensatz
- 252: Prozessor
- 254: Kommunikationsschnittstelle
- 300: Registrierungscomputersystem
- 302: Speicher
- 304: geschützter Speicherbereich
- 306: privater Schlüssel
- 308: Registrierungsanforderung
- 310: öffentlicher Schlüssel
- 312: Prozessor
- 314: Kommunikationsschnittstelle
- 320: Registrierungscomputersystem
- 322: Speicher
- 324: geschützter Speicherbereich
- 326: privater Schlüssel
- 328: Registrierungsanforderung
- 330: öffentlicher Schlüssel
- 332: Prozessor
- 334: Kommunikationsschnittstelle
- 340: Registrierungscomputersystem
- 342: Speicher
- 344: geschützter Speicherbereich
- 346: privater Schlüssel
- 348: Registrierungsanforderung
- 350: öffentlicher Schlüssel
- 352: Prozessor
- 354: Kommunikationsschnittstelle
- 400: Geburtsurkunde
- 404: Datensatz
- 410: maschinenlesbarer Code
- 420: ID-Dokument
- 422: Datensatz
- 424: Lichtbild
- 430: maschinenlesbarer Code

## Patentansprüche

1. Computerimplementiertes Verfahren zum manipulationssicheren Ausstellen und Speichern einer Mehrzahl von elektronischen Urkunden (116) unter Verwendung einer Blockchain (106), wobei die elektronischen Urkunden (116) jeweils einer Spezifikation (110) einer vorgegebenen Mehrzahl von Spezifikationen (110) entsprechen, wobei die Spezifikationen (110) der Mehrzahl von Spezifikationen (110) unterschiedlichen hoheitlichen Institutionen einer Mehrzahl von hoheitlichen Institutionen zugeordnet sind, wobei die Spezifikationen (110) neben kryptografischen Bedingungen jeweils inhaltliche Bedingungen zum Vorhandensein von vordefinierten Angaben umfassen, wobei die Blockchain(106) eine Mehrzahl von Programmmodulen (108) umfasst, wobei die Programmmodule (108) jeweils einer der Spezifikationen (110) zugeordnet sind, wobei die Blockchain (106) von einem Blockchain-Netzwerk (100) bereitgestellt wird, welches eine Mehrzahl von Blockchain-Servern (102, 132, 142) umfasst, wobei die Blockchain-Server (102, 132, 142) jeweils dazu konfiguriert sind, zusätzliche Blöcke für die Blockchain (106) zu erstellen und in die Blockchain (106) einzutragen, wobei die Blockchain-Server (102, 132, 142) unterschiedlichen hoheitlichen Institutionen zugeordnet sind,
wobei das Verfahren umfasst:
• Empfangen eines ersten Datensatzes (210) zum Eintragen in die Blockchain (106) durch einen ersten Blockchain-Server (102) des Blockchain-Netzwerks (100), wobei der erste Datensatz (210) Daten einer auszustellenden ersten elektronischen Urkunde (116) entsprechend einer ersten Spezifikation (110) einer ersten hoheitlichen Institution umfasst, wobei der erste Blockchain-Server (102) der ersten hoheitlichen Institution zugeordnet ist,
• Ausführen erster Programminstruktionen eines ersten Programmmoduls (108) der Mehrzahl von Programmmodulen (108) durch den ersten Blockchain-Server (102), wobei das erste Programmmodul (108) zum Ausstellen von elektronischen Urkunde (116) entsprechend der ersten Spezifikation (110) konfiguriert ist, wobei das Ausführen der ersten Programminstruktionen ein Prüfen des ersten Datensatzes (210) durch den ersten Blockchain-Server (102) umfasst, ob der erste Datensatz (210) die erste Spezifikation (110) erfüllt, falls der erste Datensatz (210) die erste Spezifikation (110) erfüllt, ein Hinzufügen des ersten Datensatzes (210) zu einem ersten zusätzlichen Block der Blockchain (106).
wobei das Verfahren ferner umfasst:
• Empfangen eines dritten Datensatzes zum Eintragen in die Blockchain (106) durch den ersten Blockchain-Server (102) des Blockchain-Netzwerks (100), wobei der dritte Datensatz Daten zur Ergänzung des ersten Datensatzes (210) der ausgestellten ersten elektronischen Urkunde (116) und einen Identifikator des ersten Datensatzes (210) umfasst,
• Ausführen der ersten Programminstruktionen durch den ersten Blockchain-Server (102), wobei das Ausführen der ersten Programminstruktionen ein Prüfen des dritten Datensatzes durch den ersten Blockchain-Server (102) umfasst, ob der dritte Datensatz ein oder mehrere von dem ersten Programmmodul (108) festgelegte erste Voraussetzungen erfüllt, falls der dritte Datensatz die ersten Voraussetzungen erfüllt, ein Hinzufügen des dritten Datensatzes zu einem dritten zusätzlichen Block der Blockchain (106),
wobei der erste Datensatz (210) einen öffentlichen kryptografischen Schlüssel eines asymmetrischen Schlüsselpaars der ersten elektronischen Urkunde (116) umfasst, wobei der dritte Datensatz mit einem privaten kryptografischen Schlüssel des asymmetrischen Schlüsselpaars der ersten elektronischen Urkunde (116) signiert ist,
wobei eine der ersten Voraussetzungen eine gültige Signatur des dritten Datensatzes mit dem privaten kryptografischen Schlüssel des asymmetrischen Schlüsselpaars der ersten elektronischen Urkunde (116) ist und wobei das Ausführen der ersten Programminstruktionen das Prüfen der Signatur des dritten Datensatzes unter Verwendung des von dem ersten Datensatz (210) bereitgestellten öffentlichen kryptografischen Schlüssels umfasst.

2. Computerimplementiertes Verfahren nach Anspruch 1, wobei der erste Datensatz (210) signiert ist, wobei die Signatur des ersten Datensatzes (210) als ein Nachweis einer Berechtigung zum Ausstellen einer elektronischen Urkunde (116) entsprechend der ersten Spezifikation (110) der ersten hoheitlichen Institution dient und der erste Blockchain-Server (102) als eine Voraussetzung für die Eintragung des ersten Datensatzes (210) in die Blockchain (106) unter Verwendung eines ersten öffentlichen kryptografischen Schlüssels (114) prüft, ob die Signatur des ersten Datensatzes (210) gültig ist, und/oder
wobei die ersten Spezifikation (110) eine gültige Signatur des ersten Datensatzes (210) umfasst und wobei das Ausführen der ersten Programminstruktionen das Prüfen der Signatur des ersten Datensatzes (210) unter Verwendung des ersten öffentlichen kryptografischen Schlüssels (114) umfasst, und/oder
wobei der erste öffentliche kryptografische Schlüssel (114) zur Prüfung der Signatur des ersten Datensatzes (210) von der Blockchain (106) zur Verfügung gestellt wird.

3. Computerimplementiertes Verfahren nach einem der vorangehenden Ansprüche, wobei der erste Datensatz (210) über eine Ende-zu-Ende-verschlüsselte Kommunikationsverbindung empfangen wird, und/oder
wobei es sich bei den elektronischen Urkunden (116) um Geburtsurkunden handelt, und/oder
wobei das Verfahren ferner umfasst:
• Empfangen eines zweiten Datensatzes (230) zum Eintragen in die Blockchain (106) durch einen zweiten Blockchain-Server (104) des Blockchain-Netzwerks (100), wobei der zweite Datensatz (230) Daten einer auszustellenden zweiten elektronischen Urkunde (116) entsprechend einer zweiten Spezifikation (110) einer zweiten hoheitlichen Institution umfasst, wobei der zweite Blockchain-Server (104) der zweiten hoheitlichen Institution zugeordnet ist,
• Ausführen zweiter Programminstruktionen eines zweiten Programmmoduls (108) der Mehrzahl von Programmmodulen (108) durch den zweiten Blockchain-Server (104), wobei das zweite Programmmodul (108) zum Ausstellen von elektronischen Urkunden (116) entsprechend der zweiten Spezifikation (110) konfiguriert ist, wobei das Ausführen der zweiten Programminstruktionen ein Prüfen des zweiten Datensatzes (230) durch den zweiten Blockchain-Server (104) umfasst, ob der zweite Datensatz (230) die zweite Spezifikation (110) erfüllt, falls der zweite Datensatz (230) die zweite Spezifikation (110) erfüllt, ein Hinzufügen des zweiten Datensatzes (230) zu einem zweiten zusätzlichen Block der Blockchain (106).

4. Computerimplementiertes Verfahren nach einem der vorangehenden Ansprüche, wobei das Verfahren ferner umfasst:
Ausstellen einer ersten körperlichen Urkunde (400), welche inhaltlich mit der ersten elektronischen Urkunde (116) übereinstimmt, unter Verwendung des ersten Datensatz (210), wobei die erste körperliche Urkunde (400) einen maschinenlesbaren Code (410) umfasst, wobei der maschinenlesbare Code (410) einen Identifikator des ersten Datensatzes (210) und/oder einen Identifikator des dritten Datensatzes umfasst, und/oder
wobei das Verfahren ferner umfasst:
• Empfangen eines vierten Datensatzes zum Eintragen in die Blockchain (106) durch den ersten Blockchain-Server (102) des Blockchain-Netzwerks (100), wobei der vierte Datensatz Daten einer ausgestellten dritten elektronischen Urkunde (116) entsprechend der ersten Spezifikation (110) der ersten hoheitlichen Institution oder entsprechend einer vierten Spezifikation (110) einer vierten von der Mehrzahl von hoheitlichen Institutionen nicht umfassten hoheitlichen Institution umfasst,
• Ausführen vierter Programminstruktionen des ersten Programmmoduls (108) durch den ersten Blockchain-Server (102), wobei das Ausführen der vierten Programminstruktionen ein Prüfen des vierten Datensatzes durch den ersten Blockchain-Server (102) umfasst, ob der vierte Datensatz ein oder mehrere von dem ersten Programmmodul (108) festgelegte zweite Voraussetzungen erfüllt, falls der vierte Datensatz die zweiten Voraussetzungen erfüllt, ein Hinzufügen des vierten Datensatzes zu einem vierten zusätzlichen Block der Blockchain (106).
wobei beispielsweise die vierten Programminstruktionen und zweiten Voraussetzungen identisch zu den ersten Programminstruktionen und ersten Spezifikation (110) sind.

5. Computerimplementiertes Verfahren nach einem der vorangehenden Ansprüche, wobei das Verfahren ferner umfasst:
• Empfangen eines fünften Datensatzes zum Eintragen in die Blockchain (106) durch den ersten Blockchain-Server (102) des Blockchain-Netzwerks (100), wobei der fünfte Datensatz einen Identifikator eines unter Verwendung des ersten Datensatzes (210) ausgestellten körperlichen ID-Dokuments (420) und den Identifikator des ersten Datensatzes (210) umfasst,
• Ausführen fünfter Programminstruktionen des ersten Programmmoduls (108) durch den ersten Blockchain-Server (102), wobei das Ausführen der fünften Programminstruktionen ein Prüfen des fünften Datensatzes durch den ersten Blockchain-Server (102) umfasst, ob der fünfte Datensatz ein oder mehrere von dem ersten Programmmodul (108) festgelegte dritte Voraussetzungen erfüllt, falls der fünfte Datensatz die dritten Voraussetzungen erfüllt, ein Hinzufügen des fünften Datensatzes zu einem fünften zusätzlichen Block der Blockchain (106).
wobei das Verfahren beispielsweise ferner umfasst:
Ausstellen des körperlichen ID-Dokuments (420) unter Verwendung des ersten Datensatzes (210), wobei das ID-Dokument (420) einen maschinenlesbaren Code (430) umfasst, wobei der maschinenlesbare Code (430) zumindest einen der folgenden Identifikatoren umfasst: den Identifikator des ersten Datensatzes (210), den Identifikator des ersten Datensatzes (210) oder einen Identifikator des fünften Datensatzes.

6. Computerimplementiertes Verfahren nach einem der vorangehenden Ansprüche, wobei das Verfahren ferner umfasst:
• Empfangen einer Leseanfrage (208) zum Lesen eines der Datensätze (210, 230, 250) der Blockchain durch den ersten Blockchain-Server (102), wobei die Leseanfrage (208) signiert ist,
• Prüfen durch den ersten Blockchain-Server (102) unter Verwendung eines zweiten öffentlichen kryptografischen Schlüssels (114), ob die Signatur der Leseanfrage (208) gültig ist,
• falls die Signatur der Leseanfrage (208) gültig ist, Senden einer Kopie des angefragten Datensatzes (210, 230, 250) an einen Absender (200, 220, 240) der Leseanfrage (208).
wobei beispielsweise der zweite öffentliche kryptografische Schlüssel (114) zur Prüfung der Signatur der Leseanfrage (208) von der Blockchain (106) zur Verfügung gestellt wird.

7. Computerimplementiertes Verfahren nach einem der vorangehenden Ansprüche, wobei das Verfahren ferner umfasst:
• Empfangen einer Anfrage nach einer Kopie der Blockchain (106) durch den ersten Blockchain-Server (102), wobei die Anfrage signiert ist,
• Prüfen durch den ersten Blockchain-Server (102) unter Verwendung eines dritten öffentlichen kryptografischen Schlüssels (114), ob die Signatur der Anfrage gültig ist,
• falls die Signatur der Anfrage gültig ist, Senden der Kopie der Blockchain (106) an einen Absender der Anfrage,
wobei beispielsweise der dritte öffentliche kryptografische Schlüssel (114) zur Prüfung der Signatur der Anfrage nach einer Kopie der Blockchain (106) von der Blockchain (106) zur Verfügung gestellt wird.

8. Computerimplementiertes Verfahren nach einem der vorangehenden Ansprüche, wobei das Verfahren auf eine Änderung der Blockchain (106) hin, ferner ein Senden einer Kopie der geänderten Blockchain (106) an einen registrierten Empfänger durch den ersten Blockchain-Server (102) umfasst.

9. Computerimplementiertes Verfahren nach Anspruch 8, wobei der registrierten Empfänger in der Blockchain (106) eingetragen ist,
wobei das Verfahren ferner umfasst:
• Empfangen einer ersten Registrierungsanforderung (308, 328, 348) zum Registrieren eines Empfängers von Kopie der Blockchain (106) im Fall einer Änderung der Blockchain (106) durch den ersten Blockchain-Server (102),
wobei die erste Registrierungsanforderung (308, 328, 348) signiert ist,
• Prüfen durch den ersten Blockchain-Server (102) unter Verwendung eines vierten öffentlichen kryptografischen Schlüssels (114), ob die Signatur der ersten Registrierungsanforderung (308, 328, 348) gültig ist,
• falls die Signatur der ersten Registrierungsanforderung (308, 328, 348) gültig ist, Registrieren des Empfängers in der Blockchain (106), wobei das Registrieren ein Hinzufügen der Adresse des zu registrierenden Empfängers zu einem sechsten zusätzlichen Block der Blockchain (106) umfasst,
wobei beispielsweise der vierte öffentliche kryptografische Schlüssel (114) zur Prüfung der Signatur der ersten Registrierungsanforderung (308, 328, 348) von der Blockchain (106) zur Verfügung gestellt wird.

10. Computerimplementiertes Verfahren nach einem der vorangehenden Ansprüche, wobei das Verfahren ferner umfasst:
• Empfangen einer zweiten Registrierungsanforderung (308, 328, 348) zum Eintragen eines von der Blockchain (106) bereitzustellenden öffentlichen kryptografischen Schlüssel (114) durch den ersten Blockchain-Server (102), wobei die zweite Registrierungsanforderung (308, 328, 348) signiert ist,
• Prüfen durch den ersten Blockchain-Server (102) unter Verwendung eines fünften öffentlichen kryptografischen Schlüssels (112), ob die Signatur der zweiten Registrierungsanforderung (308, 328, 348) gültig ist,
• falls die Signatur der zweiten Registrierungsanforderung (308, 328, 348) gültig ist, Eintragen des bereitzustellenden öffentlichen kryptografischen Schlüssels in die Blockchain (106), wobei des bereitzustellenden öffentlichen kryptografischen Schlüssels (114) zu einem siebten zusätzlichen Block der Blockchain (106) umfasst,
wobei beispielsweise der fünfte öffentliche kryptografische Schlüssel (112) zur Prüfung der Signatur der zweiten Registrierungsanforderung (308, 328, 348) von der Blockchain (106) zur Verfügung gestellt wird.

11. Computerimplementiertes Verfahren nach einem der vorangehenden Ansprüche, wobei jedes der Programmmodule (108) einer Spezifikation (110) zugeordnet ist, welche genau einer der unterschiedlichen hoheitlichen Institutionen zugeordnet ist,
oder wobei jeder der Blockchain-Server (102, 132, 142) genau einer der unterschiedlichen hoheitlichen Institutionen zugeordnet ist.

12. Computerimplementiertes Verfahren nach einem der vorangehenden Ansprüche, wobei zumindest eines der Programmmodule (108) einer Spezifikation (110) zugeordnet ist, welche mehr als einer der unterschiedlichen hoheitlichen Institutionen zugeordnet ist,
oder wobei jeder der Blockchain-Server (102, 132, 142) mehr als einer der unterschiedlichen hoheitlichen Institutionen zugeordnet ist.

13. Blockchain-Server (102, 132, 142) eines Blockchain-Netzwerks (100) zum manipulationssicheren Ausstellen und Speichern von elektronischen Urkunden (116) entsprechend einer Spezifikation (110) einer hoheitlichen Institution einer Mehrzahl von hoheitlichen Institutionen unter Verwendung einer von dem Blockchain-Netzwerk (100) bereitgestellten Blockchain (106), wobei die Spezifikation (110) neben einer kryptografischen Bedingung eine inhaltliche Bedingung zum Vorhandensein von vordefinierten Angaben umfasst, wobei der Blockchain-Server (102, 132, 142) der hoheitlichen Institution zugeordnet ist und das Blockchain-Netzwerk (100) eine Mehrzahl von Blockchain-Servern (102, 132, 142) umfasst, welche jeweils einer der hoheitlichen Institutionen zugeordnet sind, wobei die Blockchain (106) eine Mehrzahl von Programmmodulen (108) umfasst, wobei die Programmmodule (108) jeweils einer der Spezifikationen (110) zugeordnet sind,
wobei der Blockchain-Server (102, 132, 142) konfiguriert ist zum:
• Empfangen eines Datensatzes (210) zum Eintragen in die Blockchain (106), wobei der Datensatz (210) Daten einer auszustellenden elektronischen Urkunde (116) entsprechend der Spezifikation (110) der hoheitlichen Institution umfasst,
• Ausführen Programminstruktionen eines Programmmoduls (108) der Mehrzahl von Programmmodulen (108), wobei das entsprechende Programmmodul (108) zum Ausstellen von elektronischen Urkunden (116) entsprechend der Spezifikation (110) konfiguriert ist, wobei das Ausführen der Programminstruktionen ein Prüfen des Datensatzes (210) durch den Blockchain-Server (102, 132, 142) umfasst, ob der Datensatz (210) die Spezifikation (110) erfüllt, falls der Datensatz (210) die Spezifikation (110) erfüllt, ein Hinzufügen des Datensatzes (210) zu einem zusätzlichen Block der Blockchain (106).
wobei der Blockchain-Server (102, 132, 142) ferner konfiguriert ist zum:
• Empfangen eines weiteren Datensatzes zum Eintragen in die Blockchain (106) durch den Blockchain-Server (102, 132, 142) des Blockchain-Netzwerks (100), wobei der weitere Datensatz Daten zur Ergänzung des Datensatzes (210) der ausgestellten elektronischen Urkunde (116) und einen Identifikator des Datensatzes (210) der ausgestellten elektronischen Urkunde (116) umfasst,
• Ausführen der Programminstruktionen durch den Blockchain-Server (102, 132, 142), wobei das Ausführen der Programminstruktionen ein Prüfen des weiteren Datensatzes durch den Blockchain-Server (102, 132, 142) umfasst, ob der weitere Datensatz ein oder mehrere von dem Programmmodul (108) festgelegte Voraussetzungen erfüllt, falls der weitere Datensatz die Voraussetzungen erfüllt, ein Hinzufügen des weiteren Datensatzes zu einem weiteren zusätzlichen Block der Blockchain (106),
wobei der Datensatz (210) der ausgestellten elektronischen Urkunde (116) einen öffentlichen kryptografischen Schlüssel eines asymmetrischen Schlüsselpaars der elektronischen Urkunde (116) umfasst, wobei der weitere Datensatz mit einem privaten kryptografischen Schlüssel des asymmetrischen Schlüsselpaars der elektronischen Urkunde (116) signiert ist,
wobei eine der Voraussetzungen eine gültige Signatur des weiteren Datensatzes mit dem privaten kryptografischen Schlüssel des asymmetrischen Schlüsselpaars der elektronischen Urkunde (116) ist und wobei das Ausführen der Programminstruktionen das Prüfen der Signatur des weiteren Datensatzes unter Verwendung des von dem Datensatz (210) der ausgestellten elektronischen Urkunde (116) bereitgestellten öffentlichen kryptografischen Schlüssels umfasst.

14. Blockchain-Netzwerk (100) zum manipulationssicheren Ausstellen und Speichern von elektronischen Urkunden (116) unter Verwendung einer von dem Blockchain-Netzwerk (100) bereitgestellten Blockchain (106), wobei die elektronischen Urkunden (116) jeweils einer Spezifikation (110) einer vorgegebenen Menge von Spezifikationen (110) entsprechen, wobei die Spezifikationen (110) der Menge von Spezifikationen (110) unterschiedlichen hoheitlichen Institutionen zugeordnet sind, wobei die Spezifikationen (110) neben kryptografischen Bedingungen jeweils inhaltliche Bedingungen zum Vorhandensein von vordefinierten Angaben umfassen, wobei das Blockchain-Netzwerk (100) eine Mehrzahl von Blockchain-Servern (102, 132, 142) umfasst, wobei die Blockchain-Server (102, 132, 142) dazu konfiguriert sind, zusätzliche Blöcke für die Blockchain (106) zu erstellen und in die Blockchain (106) einzutragen, wobei die Blockchain-Server (102, 132, 142) unterschiedlichen hoheitlichen Institutionen zugeordnet sind, wobei die Blockchain (106) eine Mehrzahl von Programmmodulen (108) umfasst, wobei die Programmmodule (108) jeweils einer der Spezifikationen (110) zugeordnet sind,
wobei das Blockchain-Netzwerk (100) konfiguriert ist zum:
• Empfangen eines Datensatzes (210) zum Eintragen in die Blockchain (106) durch einen Blockchain-Server (102) des Blockchain-Netzwerks (100), wobei der Datensatz (210) Daten einer auszustellenden elektronischen Urkunde (116) entsprechend einer Spezifikation (110) einer hoheitlichen Institution umfasst, wobei der Blockchain-Server (102) der hoheitlichen Institution zugeordnet ist,
• Ausführen von Programminstruktionen eines Programmmoduls (108) der Mehrzahl von Programmmodulen (108) durch den Blockchain-Server (102), wobei das entsprechende Programmmodul (108) zum Ausstellen von elektronischen Urkunden (116) entsprechend der Spezifikation (110) konfiguriert ist, wobei das Ausführen der Programminstruktionen ein Prüfen des Datensatzes (210) durch den Blockchain-Server (102) umfasst, ob der Datensatz die Spezifikation (110) erfüllt, falls der Datensatz (210) die Spezifikation (110) erfüllt, ein Hinzufügen des Datensatzes (210) zu einem zusätzlichen Block der Blockchain (106).
wobei das Blockchain-Netzwerk (100) ferner konfiguriert ist zum:
• Empfangen eines weiteren Datensatzes zum Eintragen in die Blockchain (106) durch den Blockchain-Server (102) des Blockchain-Netzwerks (100), wobei der weitere Datensatz Daten zur Ergänzung des Datensatzes (210) der ausgestellten elektronischen Urkunde (116) und einen Identifikator des Datensatzes (210) der ausgestellten elektronischen Urkunde (116) umfasst,
• Ausführen der Programminstruktionen durch den Blockchain-Server (102), wobei das Ausführen der Programminstruktionen ein Prüfen des weiteren Datensatzes durch den Blockchain-Server (102) umfasst, ob der weitere Datensatz ein oder mehrere von dem Programmmodul (108) festgelegte Voraussetzungen erfüllt, falls der weitere Datensatz die Voraussetzungen erfüllt, ein Hinzufügen des weiteren Datensatzes zu einem weiteren zusätzlichen Block der Blockchain (106),
wobei der Datensatz (210) der ausgestellten elektronischen Urkunde (116) einen öffentlichen kryptografischen Schlüssel eines asymmetrischen Schlüsselpaars der elektronischen Urkunde (116) umfasst, wobei der weitere Datensatz mit einem privaten kryptografischen Schlüssel des asymmetrischen Schlüsselpaars der elektronischen Urkunde (116) signiert ist,
wobei eine der Voraussetzungen eine gültige Signatur des weiteren Datensatzes mit dem privaten kryptografischen Schlüssel des asymmetrischen Schlüsselpaars der elektronischen Urkunde (116) ist und wobei das Ausführen der Programminstruktionen das Prüfen der Signatur des weiteren Datensatzes unter Verwendung des von dem Datensatz (210) der ausgestellten elektronischen Urkunde (116) bereitgestellten öffentlichen kryptografischen Schlüssels umfasst.

## Claims

1. A computer-implemented method for tamper-proof issuing and storing of a plurality of electronic certificates (116) using a blockchain (106), wherein the electronic certificates (116) correspond each to a specification (110) of a predefined plurality of specifications (110), wherein the specifications (110) of the plurality of specifications (110) are assigned to different sovereign institutions of a plurality of sovereign institutions, wherein the specifications (110) each comprise, besides cryptographic conditions, content-based conditions relating to the presence of predefined details, wherein the blockchain (106) comprises a plurality of program modules (108), wherein the program modules (108) are each assigned to one of the specifications (110), wherein the blockchain (106) is provided by a blockchain network (100) which comprises a plurality of blockchain servers (102, 132, 142), wherein the blockchain servers (102, 132, 142) are each configured to create additional blocks for the blockchain (106) and to enter these into the blockchain (106), wherein the blockchain servers (102, 132, 142) are assigned to different sovereign institutions,
wherein the method comprises the steps of:
• receiving, by a first blockchain server (102) of the blockchain network (100), a first data record (210) for entry into the blockchain (106), wherein the first data record (210) comprises data of a first electronic certificate (116) to be issued according to a first specification (110) of a first sovereign institution, wherein the first blockchain server (102) is assigned to the first sovereign institution,
• executing, by the first blockchain server (102), first program instructions of a first program module (108) of the plurality of program modules (108), wherein the first program module (108) is configured to issue an electronic certificate (116) according to the first specification (110), wherein the execution of the first program instructions comprises an examination of the first data record (210) by the first blockchain server (102) in respect of whether the first data record (210) fulfils the first specification (110), and, if the first data record (210) fulfils the first specification (110), adding the first data record (210) to a first additional block of the blockchain (106),
wherein the method further comprises the steps of:
• receiving, by the first blockchain server (102) of the blockchain network (100), a third data record for entry into the blockchain (106), wherein the third data record comprises data for supplementing the first data record (210) of the issued first electronic certificate (116) and an identifier of the first data record (210),
• executing the first program instructions by the first blockchain server (102), wherein the execution of the first program instructions comprises an examination of the third data record by the first blockchain server (102) in respect of whether the third data record fulfils one or more first preconditions defined by the first program module (108), and, if the third data record fulfils the first preconditions, adding the third data record to a third additional block of the blockchain (106),
wherein the first data record (210) comprises a public cryptographic key of an asymmetric key pair of the first electronic certificate (116), wherein the third data record is signed with a private cryptographic key of the asymmetric key pair of the first electronic certificate (116),
wherein one of the first preconditions is a valid signature of the third data record with the private cryptographic key of the asymmetric key pair of the first electronic certificate (116), and wherein the execution of the first program instructions comprises the examination of the signature of the third data record using the public cryptographic key provided by the first data record (210).

2. The computer-implemented method according to claim 1, wherein the first data record (210) is signed, wherein the signature of the first data record (210) serves as a proof of authorisation to issue an electronic certificate (116) according to the first specification (110) of the first sovereign institution, and the first blockchain server (102), as a precondition for the entry of the first data record (210) into the blockchain (106), examines, with use of a first public cryptographic key (114), whether the signature of the first data record (210) is valid, and/or
wherein the first specification (110) comprises a valid signature of the first data record (210), and wherein the execution of the first program instructions comprises the examination of the signature of the first data record (210) with use of the first public cryptographic key (114), and/or
wherein the first public cryptographic key (114) for examination of the signature of the first data record (210) is made available by the blockchain (106).

3. The computer-implemented method according to one of the preceding claims, wherein the first data record (210) is received via an end-to-end-encrypted communications link, and/or
wherein the electronic certificates (116) are birth certificates, and/or
wherein the method further comprises the steps of:
• receiving, by a second blockchain server (104) of the blockchain network (100), a second data record (230) for entry into the blockchain (106), wherein the second data record (230) comprises data of a second electronic certificate (116) to be issued according to a second specification (110) of a second sovereign institution, wherein the second blockchain server (104) is assigned to the second sovereign institution,
• executing, by the second blockchain server (104), second program instructions of a second program module (108) of the plurality of program modules (108), wherein the second program module (108) is configured to issue electronic certificates (116) according to the second specification (110), wherein the execution of the second program instructions comprises an examination of the second data record (230) by the second blockchain server (104) in respect of whether the second data record (230) fulfils the second specification (110), and, if the second data record (230) fulfils the second specification (110), adding the second data record (230) to a second additional block of the blockchain (106).

4. The computer-implemented method according to one of the preceding claims, wherein the method further comprises the step of:
issuing a first physical certificate (400), which in terms of content matches the first electronic certificate (116), with use of the first data record (210), wherein the first physical certificate (400) comprises a machine-readable code (410), wherein the machine-readable code (410) comprises an identifier of the first data record (210) and/or an identifier of the third data record, and/or
wherein the method further comprises the steps of:
• receiving, by the first blockchain server (102) of the blockchain network (100), a fourth data record for entry into the blockchain (106), wherein the fourth data record comprises data of an issued third electronic certificate (116) according to the first specification (110) of the first sovereign institution or according to a fourth specification (110) of a fourth sovereign institution not comprised by the plurality of sovereign institutions,
• executing, by the first blockchain server (102), fourth program instructions of the first program module (108), wherein the execution of the fourth program instructions comprises an examination of the fourth data record by the first blockchain server (102) in respect of whether the fourth data record fulfils one or more second preconditions defined by the first program module (108), and, if the fourth data record fulfils the second preconditions, adding the fourth data record to a fourth additional block of the blockchain (106),
wherein, for example, the fourth program instructions and second preconditions are identical to the first program instructions and first specification (110).

5. The computer-implemented method according to one of the preceding claims, wherein the method further comprises the steps of:
• receiving, by the first blockchain server (102) of the blockchain network (100), a fifth data record for entry into the blockchain (106), wherein the fifth data record comprises an identifier of a physical ID document (420) issued with use of the first data record (210) and the identifier of the first data record (210),
• executing, by the first blockchain server (102), fifth program instructions of the first program module (108), wherein the execution of the fifth program instructions comprises an examination of the fifth data record by the first blockchain server (102) in respect of whether the fifth data record fulfils one or more third preconditions defined by the first program module (108), and, if the fifth data record fulfils the third preconditions, adding the fifth data record to a fifth additional block of the blockchain (106),
wherein the method, for example, further comprises the step of:
issuing the physical ID document (420) with use of the first data record (210), wherein the ID document (420) comprises a machine-readable code (430), wherein the machine-readable code (430) comprises at least one of the following identifiers: the identifier of the first data record (210), the identifier of the first data record (210) or an identifier of the fifth data record.

6. The computer-implemented method according to one of the preceding claims, wherein the method further comprises the steps of:
• receiving, by the first blockchain server (102), a read request (208) to read one of the data records (210, 230, 250) of the blockchain, wherein the read request (208) is signed,
• examining, by the first blockchain server (102) with use of a second public cryptographic key (114), whether the signature of the read request (208) is valid,
• if the signature of the read request (208) is valid, sending a copy of the requested data record (210, 230, 250) to a sender (200, 220, 240) of the read request (208),
wherein, for example, the second public cryptographic key (114) for examination of the signature of the read request (208) is provided by the blockchain (106).

7. The computer-implemented method according to one of the preceding claims, wherein the method further comprises the steps of:
• receiving, by the first blockchain server (102), a request for a copy of the blockchain (106), wherein the request is signed,
• examining, by the first blockchain server (102) with use of a third public cryptographic key (114), whether the signature of the request is valid,
• if the signature of the request is valid, sending the copy of the blockchain (106) to a sender of the request,
wherein, for example, the third public cryptographic key (114) for examination of the signature of the request for a copy of the blockchain (106) is provided by the blockchain (106).

8. The computer-implemented method according to one of the preceding claims, wherein the method, in response to a modification to the blockchain (106), further comprises a step of sending a copy of the modified blockchain (106) to a registered receiver by the first blockchain server (102).

9. The computer-implemented method according to claim 8, wherein the registered receiver is entered in the blockchain (106),
wherein the method further comprises the steps of:
• receiving, by the first blockchain server (102), a first registration request (308, 328, 348) to register a receiver of copies of the blockchain (106) in the event of a modification of the blockchain (106), wherein the first registration request (308, 328, 348) is signed,
• examining, by the first blockchain server (102) with use of a fourth public cryptographic key (114), whether the signature of the first registration request (308, 328, 348) is valid,
• if the signature of the first registration request (308, 328, 348) is valid, registering the receiver in the blockchain (106), wherein the registration comprises an addition of the address of the receiver to be registered to a sixth additional block of the blockchain (106),
wherein, for example, the fourth public cryptographic key (114) for examination of the signature of the first registration request (308, 328, 348) is provided by the blockchain (106).

10. The computer-implemented method according to one of the preceding claims, wherein the method further comprises the steps of:
• receiving, by the first blockchain server (102), a second registration request (308, 328, 348) to enter a public cryptographic key (114) to be provided by the blockchain (106), wherein the second registration request (308, 328, 348) is signed,
• examining, by the first blockchain server (102) with use of a fifth public cryptographic key (112), whether the signature of the second registration request (308, 328, 348) is valid,
• if the signature of the second registration request (308, 328, 348) is valid, entering into the blockchain (106) the public cryptographic key to be provided, wherein the public cryptographic key (114) to be provided comprises a seventh additional block of the blockchain (106),
wherein, for example, the fifth public cryptographic key (112) for examination of the signature of the second registration request (308, 328, 348) is provided by the blockchain (106).

11. The computer-implemented method according to one of the preceding claims, wherein each of the program modules (108) is assigned to a specification (110) which is assigned to precisely one of the different sovereign institutions,
or wherein each of the blockchain servers (102, 132, 142) is assigned to precisely one of the different sovereign institutions.

12. The computer-implemented method according to one of the preceding claims, wherein at least one of the program modules (108) is assigned to a specification (110) which is assigned to more than one of the different sovereign institutions,
or wherein each of the blockchain servers (102, 132, 142) is assigned to more than one of the different sovereign institutions.

13. A blockchain server (102, 132, 142) of a blockchain network (100) for tamper-proof issuing and storing of electronic certificates (116) according to a specification (110) of a sovereign institution of a plurality of sovereign institutions with use of a blockchain (106) provided by the blockchain network (100), wherein the specification (110) comprises, besides a cryptographic condition, a content-based condition relating to the presence of predefined details, wherein the blockchain server (102, 132, 142) is assigned to the sovereign institution and the blockchain network (100) comprises a plurality of blockchain servers (102, 132, 142) which are each assigned to one of the sovereign institutions, wherein the blockchain (106) comprises a plurality of program modules (108), wherein the program modules (108) are each assigned to one of the specifications (110),
wherein the blockchain server (102, 132, 142) is configured to:
• receive a data record (210) for entry into the blockchain (106), wherein the data record (210) comprises data relating to an electronic certificate (116) to be issued according to the specification (110) of the sovereign institution,
• execute program instructions of a program module (108) of the plurality of program modules (108), wherein the corresponding program module (108) is configured to issue electronic certificates (116) according to the specification (110), wherein the execution of the program instructions comprises an examination of the data record (210) by the blockchain server (102, 132, 142) in respect of whether the data record (210) fulfils the specification (110), and, if the data record (210) fulfils the specification (110), adding the data record (210) to a first additional block of the blockchain (106),
wherein the blockchain server (102, 132, 142) is further configured to:
• receive, by the blockchain server (102, 132, 142) of the blockchain network (100), a further data record for entry into the blockchain (106), wherein the further data record comprises data for supplementing the data record (210) of the issued electronic certificate (116) and an identifier of the data record (210) of the issued electronic certificate (116),
• execute the program instructions by the blockchain server (102, 132, 142), wherein the execution of the program instructions comprises an examination of the further data record by the blockchain server (102, 132, 142) in respect of whether the further data record fulfils one or more preconditions defined by the program module (108), and, if the further data record fulfils the preconditions, adding the further data record to a further additional block of the blockchain (106),
wherein the data record (210) of the issued electronic certificate (116) comprises a public cryptographic key of an asymmetric key pair of the electronic certificate (116), wherein the further data record is signed with a private cryptographic key of the asymmetric key pair of the electronic certificate (116),
wherein one of the preconditions is a valid signature of the further data record with the private cryptographic key of the asymmetric key pair of the electronic certificate (116), and wherein the execution of the program instructions comprises the examination of the signature of the further data record using the public cryptographic key provided by the data record (210) of the issued electronic certificate (116).

14. A blockchain network (100) for tamper-proof issuing and storing of electronic certificates (116) with use of a blockchain (106) provided by the blockchain network (100), wherein the electronic certificates (116) correspond each to a specification (110) of a predefined quantity of specifications (110), wherein the specifications (110) of the quantity of specifications (110) are assigned to different sovereign institutions, wherein the specifications (110) each comprise, besides cryptographic conditions, content-based conditions relating to the presence of predefined details, wherein the blockchain network (100) comprises a plurality of blockchain servers (102, 132, 142), wherein the blockchain servers (102, 132, 142) are each configured to create additional blocks for the blockchain (106) and to enter these into the blockchain (106), wherein the blockchain servers (102, 132, 142) are assigned to different sovereign institutions, wherein the blockchain (106) comprises a plurality of program modules (108), wherein the program modules (108) are each assigned to one of the specifications (110),
wherein the blockchain network (100) is configured to:
• receive, by a blockchain server (102) of the blockchain network (100), a data record (210) for entry into the blockchain (106), wherein the data record (210) comprises data of an electronic certificate (116) to be issued according to a specification (110) of a sovereign institution, wherein the blockchain server (102) is assigned to the sovereign institution,
• execute, by the blockchain server (102), program instructions of a program module (108) of the plurality of program modules (108), wherein the corresponding program module (108) is configured to issue electronic certificates (116) according to the specification (110), wherein the execution of the program instructions comprises an examination of the data record (210) by the blockchain server (102) in respect of whether the data record fulfils the specification (110), and, if the data record (210) fulfils the specification (110), adding the data record (210) to an additional block of the blockchain (106),
wherein the blockchain network (100) is further configured to:
• receive, by the blockchain server (102) of the blockchain network (100), a further data record for entry into the blockchain (106), wherein the further data record comprises data for supplementing the data record (210) of the issued electronic certificate (116) and an identifier of the data record (210) of the issued electronic certificate (116), and
• execute the program instructions by the blockchain server (102), wherein the execution of the program instructions comprises an examination of the further data record by the blockchain server (102) in respect of whether the further data record fulfils one or more preconditions defined by the program module (108), and, if the further data record fulfils the preconditions, adding the further data record to a further additional block of the blockchain (106),
wherein the data record (210) of the issued electronic certificate (116) comprises a public cryptographic key of an asymmetric key pair of the electronic certificate (116), wherein the further data record is signed with a private cryptographic key of the asymmetric key pair of the electronic certificate (116),
wherein one of the preconditions is a valid signature of the further data record with the private cryptographic key of the asymmetric key pair of the electronic certificate (116), and wherein the execution of the program instructions comprises the examination of the signature of the further data record using the public cryptographic key provided by the data record (210) of the issued electronic certificate (116).

## Revendications

1. Procédé mis en oeuvre par ordinateur permettant l'établissement et l'enregistrement inviolables d'une multiplicité de certificats électroniques (116) moyennant l'emploi d'une chaine de blocs (106), dans lequel les certificats électroniques (116) correspondent respectivement à une spécification (110) parmi une multiplicité prédéfinie de spécifications (110), dans lequel les spécifications (110) de la multiplicité des spécifications (110) sont associées à des institutions souveraines différentes parmi une multiplicité d'institutions souveraines, dans lequel les spécifications (110) comprennent, à côté de stipulations cryptographiques, respectivement des stipulations de contenu concernant la présence d'indications prédéfinies, dans lequel la chaine de blocs (106) comprend une multiplicité de modules de programmes (108), dans lequel les modules de programmes (108) sont respectivement associés à une des spécifications (110), dans lequel la chaine de blocs (106) est mise à disposition par un réseau de chaînes de blocs (100), lequel comprend une multiplicité de serveurs de chaines de blocs (102, 132, 142), dans lequel les serveurs de chaines de blocs (102, 132, 142) sont respectivement conçus pour établir des blocs supplémentaires pour la chaine de blocs (106) et les incorporer dans la chaine de blocs (106), dans lequel le serveur de chaines de blocs (102, 132, 142) est associé à des institutions souveraines différentes,
le procédé comprenant :
• la réception d'un premier ensemble de données (210) à reporter dans la chaine de blocs (106) par un premier serveur de chaines de blocs (102) du réseau de chaines de blocs (100), dans lequel le premier ensemble de données (210) comprend des données d'un premier certificat électronique (116) devant être établi correspondant à une première spécification (110) d'une première institution souveraine, dans lequel le premier serveur de chaines de blocs (102) est associé à la première institution souveraine,
• l'exécution de premières instructions de programme d'un premier module de programme (108) de la multiplicité des modules de programmes (108) par le premier serveur de chaines de blocs (102), dans lequel le premier module de programme (108) est configuré pour l'établissement de certificats électroniques (116) correspondants à la première spécification (110), dans lequel l'exécution des premières instructions de programme satisfait à une vérification du premier ensemble de données (210), par le premier serveur de chaines de blocs (102), que le premier ensemble de données (210) satisfait à la première spécification (110), dans le cas où le premier ensemble de données (210) satisfait à la première spécification (110), un ajout du premier ensemble de données (210) à un premier bloc supplémentaire de la chaine de blocs (106),
le procédé comprenant en outre :
• la réception d'un troisième ensemble de données à reporter dans la chaine de blocs (106) par le premier serveur de chaines de blocs (102) du réseau de chaines de blocs (100), dans lequel le troisième ensemble de données, pour compléter le premier ensemble de données (210), comprend le premier certificat électronique (116) établi et un identificateur du premier ensemble de données (210),
• l'exécution de premières instructions de programme par le premier serveur de chaines de blocs (102), dans lequel l'exécution des premières instructions de programme satisfait à une vérification du troisième ensemble de données, par le premier serveur de chaines de blocs (102), que le troisième ensemble de données satisfait à une ou plusieurs premières stipulations fixées par le premier module de programme (108), dans le cas où le troisième ensemble de données satisfait aux premières stipulations, un ajout du troisième ensemble de données à un troisième bloc supplémentaire de la chaine de blocs (106),
dans lequel le premier ensemble de données (210) comprend une clé cryptographique publique d'une paire de clés asymétrique du premier certificat électronique (116), dans lequel le troisième ensemble de données est signé avec une clé cryptographique privée de la paire de clés asymétrique du premier certificat électronique (116),
dans lequel une les premières stipulations est une signature valide du troisième ensemble de données avec la clé cryptographique privée de la paire de clés asymétrique du premier certificat électronique (116) et dans lequel l'exécution des premières instructions de programme comprend la vérification de la signature du troisième ensemble de données moyennant l'emploi de la clé cryptographique publique fournie par le premier ensemble de données (210).

2. Procédé mis en oeuvre par ordinateur selon la revendication 1, dans lequel le premier ensemble de données (210) est signé, dans lequel la signature du premier ensemble de données (210) sert d'attestation d'une autorisation permettant d'établir un certificat électronique (116) correspondant à la première spécification (110) de la première institution souveraine et le serveur de chaines de blocs (102) vérifie, en tant que condition préalable pour l'introduction du premier ensemble de données (210) dans la chaine de blocs (106) moyennant l'emploi de la première clé cryptographique publique (114), que la signature du premier ensemble de données (210) est valide, et/ou
dans lequel la première spécification (110) comprend une signature valide du premier ensemble de données (210) et dans lequel l'exécution des premières instructions de programme comprend la vérification de la signature du premier ensemble de données (210) moyennant l'emploi de la première clé cryptographique publique (114), et/ou
dans lequel la première clé cryptographique publique (114) est mise à disposition pour la vérification de la signature du premier ensemble de données (210) par la chaine de blocs (106).

3. Procédé mis en oeuvre par ordinateur selon l'une des revendications précédentes, dans lequel le premier ensemble de données (210) est reçu par le biais d'une connexion de communication chiffrée de bout en bout, et/ou
dans lequel, dans le cas des certificats électroniques (116), il s'agit d'actes de naissances, et/ou
le procédé comprenant en outre :
• la réception d'un deuxième ensemble de données (230) à reporter dans la chaine de blocs (106) par un deuxième serveur de chaines de blocs (104) du réseau de chaines de blocs (100), dans lequel le deuxième ensemble de données (230) comprend des données d'un deuxième certificat électronique (116) devant être établi correspondant à une deuxième spécification (110) d'une deuxième institution souveraine, dans lequel le deuxième serveur de chaines de blocs (104) est associé à la deuxième institution souveraine,
• l'exécution de deuxièmes instructions de programme d'un deuxième module de programme (108) de la multiplicité des modules de programmes (108) par le deuxième serveur de chaines de blocs (104), dans lequel le deuxième module de programme (108) est configuré pour l'établissement de certificats électroniques (116) correspondants à la deuxième spécification de programme (110), dans lequel l'exécution des deuxièmes instructions de programme comprend une vérification du deuxième ensemble de données (230), par le deuxième serveur de chaines de blocs (104), que le deuxième ensemble de données (230) satisfait à la deuxième spécification (110), dans le cas où le deuxième ensemble de données (230) satisfait à la deuxième spécification (110), un ajout du deuxième ensemble de données (230) à un deuxième bloc supplémentaire de la chaine de blocs (106).

4. Procédé mis en oeuvre par ordinateur selon l'une des revendications précédentes, le procédé comprenant en outre :
l'établissement d'un premier certificat physique (400), lequel correspond dans le contenu au premier certificat électronique (116), moyennant l'emploi du premier ensemble de données (210), dans lequel le premier certificat physique (400) comprend un code lisible par machine (410), dans lequel le code lisible par machine (410) comprend un identificateur du premier ensemble de données (210) et/ou un identificateur du troisième ensemble de données ; et/ou
le procédé comprenant en outre :
• la réception d'un quatrième ensemble de données à reporter dans la chaine de blocs (106) par le premier serveur de chaines de blocs (102) du réseau de chaines de blocs (100), dans lequel le quatrième ensemble de données d'un troisième certificat électronique (116) établi correspondant à la première spécification (110) de la première institution souveraine ou correspondant à une quatrième spécification (110) d'une quatrième institution souveraine non comprise par la multiplicité des institutions souveraines,
• l'exécution de quatrièmes instructions de programme du premier module de programme (108) par le premier serveur de chaines de blocs (102), dans lequel l'exécution des quatrièmes instructions de programmes comprend une vérification du quatrième ensemble de données, par le premier serveur de chaines de blocs (102), que le quatrième ensemble de données satisfait à une ou plusieurs deuxièmes conditions préalables définies par le premier module de programme (108) dans le cas où le quatrième ensemble de données satisfait aux deuxièmes conditions préalables, un ajout du quatrième ensemble de données à un quatrième bloc supplémentaire de la chaine de blocs (106),
dans lequel, par exemple, les quatrièmes instructions de programme et les deuxièmes conditions préalables sont identiques aux premières instructions de programme et à la première spécification (110).

5. Procédé mis en oeuvre par ordinateur selon l'une des revendications précédentes, le procédé comprenant en outre :
• la réception d'un cinquième ensemble de données à reporter dans la chaine de blocs (106) par le premier serveur de chaines de blocs (102) du réseau de chaines de blocs (100), dans lequel le cinquième ensemble de données comprend un identificateur d'un document d'ID physique (420) établi moyennant l'emploi du premier ensemble de données (210) et l'identificateur du premier ensemble de données (210),
• l'exécution de cinquièmes instructions de programme du premier module de programme (108) par le premier serveur de chaines de blocs (102), dans lequel l'exécution des cinquièmes instructions de programme comprend une vérification du cinquième ensemble de données, par le premier serveur de chaines de blocs (102), que le cinquième ensemble de données satisfait à une ou plusieurs troisièmes conditions préalables définies par le premier module de programme (108), dans le cas où le cinquième ensemble de données satisfait aux troisièmes conditions préalables, un ajout du cinquième ensemble de données à un cinquième bloc supplémentaire de la chaine de blocs (106),
le procédé comprenant en outre :
l'établissement d'un document d'ID physique (420) moyennant l'emploi du premier ensemble de données (210), dans lequel le document d'ID physique (420) comprend un code lisible par machine (430), dans lequel le code lisible par machine (430) comprend au moins un des identificateurs suivants : l'identificateur du premier ensemble de données (210), l'identificateur du premier ensemble de données (210) ou un identificateur du cinquième ensemble de données.

6. Procédé mis en oeuvre par ordinateur selon l'une des revendications précédentes, le procédé comprenant en outre :
• la réception d'une demande de lecture (208) pour la lecture d'un des ensembles de données (210, 230, 250) de la chaîne de blocs par le premier serveur de chaines de blocs (102), dans lequel la demande de lecture (208) est signée,
• la vérification, par le premier serveur de chaines de blocs (102), moyennant l'emploi d'une deuxième clé cryptographique publique (114), que la signature de la demande de lecture (208) est valide,
• dans le cas où la signature de la demande de lecture (208) est valide, l'envoi d'une copie de l'ensemble de données (210, 230, 250) demandé à un expéditeur (200, 220, 240) de la demande de lecture (208),
dans lequel, par exemple, la deuxième clé cryptographique publique (114) est mise à disposition pour la vérification de la signature de la demande de lecture (208) par la chaine de blocs (106).

7. Procédé mis en oeuvre par ordinateur selon l'une des revendications précédentes, le procédé comprenant en outre :
• la réception d'une demande pour une copie de la chaine de blocs (106) par le premier serveur de chaines de blocs (102), dans lequel la demande est signée,
• la vérification, par le premier serveur de chaines de blocs (102), moyennant l'emploi d'une troisième clé cryptographique publique (114), que la signature de la demande est valide,
• dans le cas où la signature de la demande est valide, l'envoi de la copie de la chaine de blocs (106) à un expéditeur de la demande,
dans lequel, par exemple, la troisième clé cryptographique publique (114) est mise à disposition pour la vérification de la signature de la demande après une copie de la chaine de blocs (106) par la chaine de blocs (106).

8. Procédé mis en oeuvre par ordinateur selon l'une des revendications précédentes, le procédé comprenant en outre, suite à une modification de la chaine de blocs (106), un envoi d'une copie de la chaine de blocs (106) modifiée à un destinataire enregistré par le premier serveur de chaines de blocs (102).

9. Procédé mis en oeuvre par ordinateur selon la revendication 8, dans lequel le destinataire enregistré est reporté dans la chaine de blocs (106),
le procédé comprenant en outre :
• la réception d'une première requête d'enregistrement (308, 328, 348) pour l'enregistrement d'un destinataire de la copie de la chaine de blocs (106) dans le cas d'une modification de la chaine de blocs (106) par le premier serveur de chaines de blocs (102), dans lequel la première requête d'enregistrement (308, 328, 348) est signée,
• la vérification, par le premier serveur de chaines de blocs (102), moyennant l'emploi d'une quatrième clé cryptographique publique (114), que la signature de la première requête d'enregistrement (308, 328, 348) est valide,
• dans le cas où la signature de la première requête d'enregistrement (308, 328, 348) est valide, l'enregistrement du destinataire dans la chaine de blocs (106), dans lequel l'enregistrement comprend un ajout de l'adresse du destinataire enregistré à un sixième bloc supplémentaire de la chaine de blocs (106),
dans lequel, par exemple, la quatrième clé cryptographique publique (114) est mise à disposition pour la vérification de la signature de la première requête d'enregistrement (308, 328, 348) par la chaine de blocs (106).

10. Procédé mis en oeuvre par ordinateur selon l'une des revendications précédentes, le procédé comprenant en outre :
• la réception d'une deuxième requête d'enregistrement (308, 328, 348) pour l'entrée d'une clé cryptographique publique (114) à mettre à disposition par la chaine de blocs (106) par le premier serveur de chaines de blocs (102), dans lequel la deuxième requête d'enregistrement (308, 328, 348) est signée,
• la vérification, par le premier serveur de chaines de blocs (102), moyennant l'emploi d'une cinquième clé cryptographique publique (112), que la signature de la deuxième requête d'enregistrement (308, 328, 348) est valide,
• dans le cas où la signature de la deuxième requête d'enregistrement (308, 328, 348) est valide, l'entrée de la clé cryptographique publique à mettre à disposition dans la chaine de blocs (106), dans lequel la clé cryptographique publique (114) à mettre à disposition comprend un septième bloc supplémentaire de la chaine de blocs (106),
dans lequel, par exemple, la cinquième clé cryptographique publique (112) est mise à disposition pour la vérification de la signature de la deuxième requête d'enregistrement (308, 328, 348) par la chaine de blocs (106).

11. Procédé mis en oeuvre par ordinateur selon l'une des revendications précédentes, dans lequel chacun des modules de programme (108) est associé à une spécification (110), laquelle est précisément associée à une des institutions souveraines différentes,
ou dans lequel chacun des serveurs de chaines de blocs (102, 132, 142) est précisément associé à l'une des institutions souveraines différentes.

12. Procédé mis en oeuvre par ordinateur selon l'une des revendications précédentes, dans lequel au moins un des modules de programme (108) est associé à une spécification (110), laquelle est associée à plus d'une des institutions souveraines différentes,
ou dans lequel chacun des serveurs de chaines de blocs (102, 132, 142) est associé à plus d'une des institutions souveraines différentes.

13. Serveur de chaines de blocs (102, 132, 142) d'un réseau de chaines de blocs (100) permettant l'établissement et l'enregistrement inviolables de certificats électroniques (116) correspondants à une spécification (110) d'une institution souveraine parmi une multiplicité d'institutions souveraines, moyennant l'emploi d'une chaine de blocs (106) fournie par le réseau de chaines de blocs (100), dans lequel la spécification (110) comprend, à côté d'une stipulation cryptographique, une stipulation concernant la présence d'indications prédéfinies, dans lequel le serveur de chaines de blocs (102, 132, 142) est associé avec l'institution souveraine et le réseau de chaînes de blocs (100) comprend une multiplicité de serveurs de chaine de blocs (102, 132, 142), lesquels sont respectivement associés à l'une des institutions souveraines, dans lequel la chaine de blocs (106) comprend une multiplicité de modules de programmes (108), dans lequel les modules de programmes (108) sont respectivement associés à une des spécifications (110),
dans lequel le serveur de chaines de blocs (102, 132, 142) est conçu pour :
• la réception d'un ensemble de données (210) à reporter dans la chaine de blocs (106), dans lequel l'ensemble de données (210) comprend des données d'un certificat électronique (116) devant être établi correspondant à la spécification (110) de l'institution souveraine,
• l'exécution d'instructions de programme d'un module de programme (108) de la multiplicité des modules de programmes (108), dans lequel le module de programme (108) correspondant est configuré pour l'établissement de certificats électroniques (116) correspondants à la spécification (110), dans lequel l'exécution des instructions de programmes comprend une vérification de l'ensemble de données (210), par le serveur de chaines de blocs (102, 132, 142), que l'ensemble de données (210) satisfait à la spécification (110), dans le cas où l'ensemble de données (210) satisfait à la spécification (110), un ajout de l'ensemble de données (210) à un bloc supplémentaire de la chaine de blocs (106),
dans lequel le serveur de chaines de blocs (102, 132, 142) est en outre configuré pour :
• la réception d'un autre ensemble de données à reporter dans la chaine de blocs (106) par le serveur de chaines de blocs (102, 132, 142) du réseau de chaines de blocs (100), dans lequel l'autre ensemble de données comprend des données pour compléter l'ensemble de données (210) du certificat électronique (116) établi et un identificateur de l'ensemble de données (210) du certificat électronique (116) établi,
• l'exécution des instructions de programme par le serveur de chaines de blocs (102, 132, 142), dans lequel l'exécution des instructions de programmes comprend une vérification de l'autre ensemble de données, par le serveur de chaines de blocs (102, 132, 142), que l'autre ensemble de données satisfait à une ou plusieurs premières conditions préalables fixées par le module de programme (108), dans le cas où l'autre ensemble de données satisfait aux conditions préalables, un ajout de l'autre ensemble de données à un autre bloc supplémentaire de la chaine de blocs (106),
dans lequel l'ensemble de données (210) du certificat électronique (116) établi comprend une clé cryptographique publique d'une paire de clés asymétrique du certificat électronique (116), dans lequel l'autre ensemble de données est signé avec une clé cryptographique privée de la paire de clés asymétrique du certificat électronique (116),
dans lequel une des conditions préalables est une signature valide de l'autre ensemble de données avec la clé cryptographique privée de la paire de clés asymétrique du certificat électronique (116) et dans lequel l'exécution des instructions de programme comprend la vérification de la signature de l'autre ensemble de données moyennant l'emploi de la clé cryptographique publique fournie par l'ensemble de données (210) du certificat électronique (116) établi.

14. Réseau de chaines de blocs (100) permettant l'établissement et l'enregistrement inviolables de certificats électroniques (116), moyennant l'emploi d'une chaine de blocs (106) fournie par le réseau de chaines de blocs (100), dans lequel les certificats électroniques (116) correspondent respectivement à une spécification (110) d'une quantité prédéfinie de spécifications (110), dans lequel les spécifications (110) de la quantité de spécifications (110) sont associées à des institutions souveraines différentes, dans lequel les spécifications (110) comprennent, à côté de stipulations cryptographiques, respectivement des stipulations de contenu concernant la présence d'indications prédéfinies, dans lequel réseau de chaines de blocs (100) comprend une multiplicité de serveurs de chaines de blocs (102, 132, 142), dans lequel les serveurs de chaines de blocs (102, 132, 142) sont configurés pour établir des blocs supplémentaires pour la chaine de blocs (106) et les incorporer dans la chaine de blocs (106), dans lequel les serveurs de chaines de blocs (102, 132, 142) sont associés à des institutions souveraines différentes, dans lequel la chaine de blocs (106) comprend une multiplicité de modules de programmes (108), dans lequel les modules de programmes (108) sont respectivement associés à une des spécifications (110),
dans lequel le réseau de chaines de blocs (100) est conçu pour :
• la réception d'un ensemble de données (210) à reporter dans la chaine de blocs (106) par le serveur de chaines de blocs (102) du réseau de chaines de blocs (100), dans lequel l'ensemble de données (210) comprend des données d'un certificat électronique (116) devant être établi correspondant une spécification (110) de l'institution souveraine, dans lequel le serveur de chaines de blocs (102) est associé à l'institution souveraine,
• l'exécution d'instructions de programme d'un module de programme (108) de la multiplicité des modules de programmes (108) par le serveur de chaines de blocs (102), dans lequel le module de programme (108) correspondant est configuré pour l'établissement de certificats électroniques (116) correspondants à la spécification (110), dans lequel l'exécution des instructions de programmes comprend une vérification de l'ensemble de données (210), par le serveur de chaines de blocs (102), que l'ensemble de données satisfait à la spécification (110), dans le cas où l'ensemble de données (210) satisfait à la spécification (110), un ajout de l'ensemble de données (210) à un bloc supplémentaire de la chaine de blocs (106),
le réseau de chaines de blocs (100) étant en outre configuré pour :
• la réception d'un autre ensemble de données à reporter dans la chaine de blocs (106) par le serveur de chaines de blocs (102) du réseau de chaines de blocs (100), dans lequel l'autre ensemble de données comprend le certificat électronique (116) établi pour compléter l'ensemble de données (210) et un identificateur de l'ensemble de données (210) du certificat électronique (116) établi,
• l'exécution des instructions de programme par le serveur de chaines de blocs (102), dans lequel l'exécution des instructions de programmes comprend une vérification de l'autre ensemble de données, par le serveur de chaines de blocs (102), que l'autre ensemble de données satisfait à une ou plusieurs conditions préalables fixées par le module de programme (108), dans le cas où l'autre ensemble de données satisfait aux conditions préalables, un ajout de l'autre ensemble de données à un autre bloc supplémentaire de la chaine de blocs (106),
dans lequel l'ensemble de données (210) du certificat électronique (116) établi comprend une clé cryptographique publique d'une paire de clés asymétrique du certificat électronique (116), dans lequel l'autre ensemble de données est signé avec une clé cryptographique privée de la paire de clés asymétrique du certificat électronique (116),
dans lequel une des conditions préalables est une signature valide de l'autre ensemble de données avec la clé cryptographique privée de la paire de clés asymétrique du certificat électronique (116) et dans lequel l'exécution des instructions de programme comprend la vérification de la signature de l'autre ensemble de données moyennant l'emploi de la clé cryptographique publique fournie par l'ensemble de données (210) du certificat électronique (116) établi.
